(19) Europäisches Patentamt
European Patent Office
Office européen des brevets

(11) EP 3 009 485 B1

(12) EUROPEAN PATENT SPECIFICATION

(45) Date of publication and mention of the grant of the patent:
**21.02.2018 Bulletin 2018/08**

(51) Int Cl.:
***C09D 183/04*** (2006.01) ***C09C 1/36*** (2006.01)
***C09D 7/12*** (0000.00) ***C08K 3/22*** (2006.01)
***C09D 151/06*** (2006.01) ***C01G 23/00*** (2006.01)

(21) Application number: **15189424.3**

(22) Date of filing: **12.10.2015**

(54) **ACTIVATION ENERGY RADIATION-CURABLE SILICONE COATING COMPOSITION AND COATED ARTICLE**

DURCH AKTIVIERUNGSENERGIESTRAHLUNG HÄRTBARE SILIKONBESCHICHTUNGSZUSAMMENSETZUNG UND BESCHICHTETER ARTIKEL

COMPOSITION DE REVÊTEMENT EN SILICONE DURCISSABLE PAR ACTIVATION DE RAYONNEMENT D'ÉNERGIE ET ARTICLE REVÊTU

(84) Designated Contracting States:
**DE FR GB**

(30) Priority: **17.10.2014 JP 2014212243**

(43) Date of publication of application:
**20.04.2016 Bulletin 2016/16**

(73) Proprietor: **Shin-Etsu Chemical Co., Ltd.**
**Chiyoda-ku**
**Tokyo (JP)**

(72) Inventor: **MASUDA, Kohei**
**Annaka-shi, Gunma (JP)**

(74) Representative: **Stoner, Gerard Patrick**
**Mewburn Ellis LLP**
**City Tower**
**40 Basinghall Street**
**London EC2V 5DE (GB)**

(56) References cited:
**EP-A1- 2 281 857**
**WO-A1-2014/157149**
**WO-A1-2014/196386**
**JP-A- 2012 097 257**
**KR-A- 20140 011 959**
**US-A1- 2014 023 855**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 009 485 B1

## Description

### TECHNICAL FIELD

This invention relates to primerless silicone coating compositions having improved weathering resistance and to corresponding coated articles. More particularly, it relates to a silicone coating composition which may be coated and cured to a surface of an organic resin substrate such as polycarbonate without a need for primer, to form a cured film which is substantially free of interference fringe and foreign matter and has transparency, mar resistance, long-term adhesion, weathering resistance, and oxidation resistance; and a coated article suited for outdoor use.

This invention pertains to the preceding invention of Patent Document 1: JP-A 2012-097257 by the same assignee and achieves essential improvements in weathering resistance, oxidation resistance and fast cure.

### BACKGROUND

Organic resin substrates such as polycarbonate are used in a variety of fields due to their transparency. In particular, polycarbonate is regarded as a substitute for glass since it has better impact resistance and lighter weight than glass. Several disadvantages of polycarbonate must be compensated for before the polycarbonate can be used as the glass substitute. To this end, hard coats are applied to polycarbonate. The disadvantages to be compensated for include mar resistance and weathering resistance.

As the coating for imparting mar resistance and weathering resistance to polycarbonate, a silicone-based hard coat composition was developed as described in Patent Document 2: JP-A 2010-111715, for example. However, since the silicone-based hard coat composition is less adherent to polycarbonate, an intermediate layer known as primer must be used. The combined use of the primer and the hard coat composition requires at least two coating steps, indicating cumbersome coating formation. In the coating step, a certain percentage of products become rejected as in the manufacture of other industrial products. The percent yield of final products is proportional to the percent rejection raised to a power equal to the number of coatings. Thus, the percent yield becomes higher as the number of coatings is less, desirably the number of coatings is one.

Patent Document 1 discloses that a polycarbonate and/or polyester-based urethane-modified vinyl polymer is an effective tackifier for rendering a silicone-based hard coat composition adherent to polycarbonate. Also a mercapto-containing alkoxysilane and/or a partial hydrolytic condensate thereof is used as the means for adjusting refractive index. Further, microparticulate metal oxide is added to the coating composition for the purposes of adjusting refractive index and imparting mar resistance. With this approach, a coating can be directly formed on polycarbonate without a need for primer, yielding a coated article featuring tight adhesion, least interference fringe, mar resistance and transparency.

The composition of Patent Document 1 may be effectively utilized for surface protection, anti-glare and antireflection purposes in such displays as liquid crystal displays (LCD), touch panels, cathode ray tubes (CRT), plasma display panels (PDP), and electroluminescent (EL) displays. These applications are intended for indoor use and/or use within particular casings.

Polycarbonate is not limited to indoor use, but finds many outdoor applications such as building materials and transporting vehicles. In the outdoor application accompanied with long-term exposure to weather, direct sunshine and oxygen atmosphere, weathering resistance and oxidation resistance are essential. From the aspect of imparting weathering resistance and oxidation resistance, we find that the use of a mercapto-containing alkoxysilane and/or a partial hydrolytic condensate thereof is undesirable. This is because the mercapto group can be converted via oxidation to a detrimental functional group in the form of sulfide, sulfone, or sulfonic acid. The functional group conversion within the cured coating, if it occurs, invites stress strain, causing cracking and peeling and making it difficult to impart weathering resistance. While the mercapto-containing alkoxysilane or its partial hydrolytic condensate is used for refractive index adjustment, the microparticulate metal oxide is also used for the same purpose. Through follow-up tests, the inventor found that if the amount of microparticulate metal oxide is increased to such an extent as to make the sulfur-containing compound unnecessary, the composition is so unbalanced as to exacerbate weathering adhesion. That is, the purpose of imparting weathering resistance and oxidation resistance while maintaining adhesion, weathering adhesion, restrained interference fringes, mar resistance and transparency is substantially unachievable by merely increasing or reducing the amount of components in prior art coating compositions.

For the purpose of imparting weathering resistance and oxidation resistance while maintaining adhesion, weathering adhesion, restrained interference fringes, mar resistance and transparency, it is believed necessary to use a specific microparticulate metal oxide compliant with the purpose. For a choice from microparticulate metal oxide candidates, many factors including type of metal oxide, type and quantity of element incorporated in metal oxide in solid solution, particle size, presence/absence and type of coating layer, and type of dispersant must be considered, but few such factors have been recognized.

From the aspect of simplifying the process, there is a need for a cured coating which is endowed with weathering

resistance and oxidation resistance while maintaining adhesion, weathering adhesion, restrained interference fringe, mar resistance and transparency, and whose coating/curing mode depends on activation energy radiation cure.

Citation List

Patent Document 1: JP-A 2012-097257
Patent Document 2: JP-A 2010-111715

THE INVENTION

An object of the invention is to provide new and useful silicone coating compositions which can be coated onto a surface of an organic resin substrate, typically polycarbonate, without a primer, and which can form a cured film desirably having all of weathering resistance, oxidation resistance and fast cure, as well as adhesion, weathering adhesion, restrained interference fringes, mar resistance and transparency. Use of the compositions for coating, and coated articles comprising an organic resin substrate coated, preferably directly, with a cured film of the composition are further aspects.

The inventor has found that a silicone coating composition comprising (A) a water dispersion of core/shell type tetragonal titanium oxide solid-solution particles, (B) a polycarbonate and/or polyester-based urethane-modified vinyl polymer, (C) a hydrolytic condensate obtained from (co)hydrolytic condensation of a sulfur-free alkoxysilane and/or a partial hydrolytic condensate thereof, (D) a photo-polymerization initiator, (E) a solvent, (F) optional colloidal silica, and (G) another polymerizable vinyl compound can be coated to a surface of an organic resin substrate, typically polycarbonate, without a primer, and cured into a film which has oxidation resistance, restrained interference fringe, mar resistance and transparency. The cured film maintains adhesion for a long term even under hot humid conditions. Even after exposure to UV radiation, the cured film-bearing substrate maintains weathering adhesion between the film and the substrate and undergoes neither cracking and whitening of the cured film nor yellowing of the substrate, that is, has weathering resistance.

In one aspect, the invention provides an activation energy radiation-curable silicone coating composition comprising

(A) a water dispersion of core/shell type tetragonal titanium oxide solid-solution particles, wherein said core/shell type particles each consist of a core of tetragonal titanium oxide having tin and manganese incorporated in solid solution and a shell of silicon oxide around the core, said cores have a volume basis 50% cumulative distribution diameter ($D_{50}$) of up to 30 nm, and said core/shell type particles have a volume basis 50% cumulative distribution diameter ($D_{50}$) of up to 50 nm, both as measured by the dynamic light scattering method, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1,
(B) a polycarbonate and/or polyester-based urethane-modified vinyl polymer,
(C) a hydrolytic condensate obtained from (co)hydrolytic condensation of at least one of a sulfur-free alkoxysilane having the general formula (1):

$$R^1{}_mR^2{}_nSi(OR^3)_{4-m-n} \qquad (1)$$

wherein $R^1$ and $R^2$ are each independently hydrogen or a substituted or unsubstituted, monovalent $C_1$-$C_{12}$ hydrocarbon group, $R^1$ and $R^2$ may bond together, $R^3$ is $C_1$-$C_3$ alkyl, m and n are independently 0 or 1, m+n is 0, 1 or 2, and a partial hydrolytic condensate thereof,
(D) a photo-polymerization initiator,
(E) a solvent,
(F) optional colloidal silica, and
(G) a polymerizable vinyl compound other than components (B) and (C),

the solids content of the urethane-modified vinyl polymer (B) being 1 to 30 parts by weight per 100 parts by weight of the total solids content of components (A), (C) and (F).

Preferably the solids content of component (A) is 5 to 25% by weight based on the total solids content of the composition.

Preferably component (A) contains a basic dispersant e.g. selected from the group consisting of ammonia, alkali metal salts, and compounds having the general formula (2):

$$R^4R^5R^6R^7NOH \quad (2)$$

wherein $R^4$, $R^5$, $R^6$, and $R^7$ are each independently hydrogen, $C_1$-$C_{10}$ alkyl, aryl or aralkyl group.

Preferably component (B) is a polycarbonate-based urethane-modified vinyl polymer. More preferably, component (B) has a weight average molecular weight of 5,000 to 50,000 as measured versus polystyrene standards by gel permeation chromatography. Also preferably, component (B) has a hydroxyl number of at least 10% by weight on solids content basis.

Preferably the hydrolytic condensate as component (C) is obtained, when component (C) is mixed with component (A), from reaction with water in component (A). Also preferably, the amount of component (C) blended is 10 to 90% by weight based on the total solids content of the composition.

Preferably component (C) contains 1 to 50% by weight of (C-1) a siloxane resin having the average compositional formula (3):

$$R^8_aSi(OR^9)_b(OH)_cO_{(4-a-b-c)/2} \quad (3)$$

wherein $R^8$ is each independently a $C_1$-$C_{18}$ organic group, $R^9$ is each independently a $C_1$-$C_4$ organic group, a, b and c are numbers in the range: $0.8 \le a \le 1.5$, $0 \le b \le 0.3$, $0.001 \le c \le 0.5$, and $0.8 \le a+b+c < 2$, the siloxane resin being solid at or below 40°C and having a weight average molecular weight of at least 2,000 as measured versus polystyrene standards by gel permeation chromatography.

Preferably component (E) is at least one solvent selected from the group consisting of water, alcohols, and ketones, and is used in such an amount as to adjust the silicone coating composition to a solids concentration of 10 to 50% by weight.

Preferably the solids content of the colloidal silica as component (F) is 5 to 100 parts by weight per 100 parts by weight of the total solids content of components (A) and (C).

Preferably the amount of the polymerizable vinyl compound added as component (G) is 1 to 200 parts by weight per 100 parts by weight of the total solids content of components (A), (C) and (F).

In another aspect, the invention provides a coated article comprising an organic resin substrate and a cured film of the silicone coating composition coated directly on at least one surface of the substrate. Use of the composition for such coating is a further aspect. The preparation of the composition is a further aspect of the proposals.

Typically, the organic resin substrate is polycarbonate. Preferably the coated article exhibits a yellowness index difference of less than 10 before and after exposure to UV radiation in a dose of 300 $MJ/m^2$ and a haze difference of less than 10 before and after exposure to UV radiation in a dose of 300 $MJ/m^2$.

## ADVANTAGEOUS EFFECTS

We find that the present silicone coating compositions can be coated and cured onto a surface of an organic resin substrate, typically polycarbonate, without a primer, to form a cured film which is free of noticeable interference fringes or foreign matter, has transparency and mar resistance as well as long-term adhesion, weathering resistance and oxidation resistance. An article coated with the silicone coating composition is fully durable in outdoor applications.

## FURTHER EXPLANATIONS; OPTIONS AND PREFERENCES

The terms "a" and "an" herein do not denote a limitation of quantity, but rather denote the presence of at least one of the referenced item. As used herein, the notation ($C_n$-$C_m$) means a group containing from n to m carbon atoms per group. The terminology "(meth)acrylic" refers collectively to acrylic and methacrylic. The term "microparticles" is interchangeable with ultra-fine particles and nano-particles. UV is the abbreviation of ultraviolet radiation. Mw is a weight average molecular weight as measured versus polystyrene standards by gel permeation chromatography (GPC).

The primerless silicone coating composition featuring weathering resistance and the coated article are described in detail.

### Silicone coating composition

The silicone coating composition is defined as comprising

(A) a water dispersion of core/shell type tetragonal titanium oxide solid-solution particles, wherein said core/shell type particles each consist of a core of nano-particulate tetragonal titanium oxide having tin and manganese incorporated in solid solution and a shell of silicon oxide around the core, said cores have a volume basis 50% cumulative

distribution diameter ($D_{50}$) of up to 30 nm, and said core/shell type particles have a volume basis 50% cumulative distribution diameter ($D_{50}$) of up to 50 nm, both as measured by the dynamic light scattering method, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1,

(B) a polycarbonate and/or polyester-based urethane-modified vinyl polymer,

(C) a hydrolytic condensate obtained from (co)hydrolytic condensation of at least one of a sulfur-free alkoxysilane having the general formula (1):

$$R^1_mR^2_nSi(OR^3)_{4-m-n} \qquad (1)$$

wherein $R^1$ and $R^2$ are each independently hydrogen or a substituted or unsubstituted, monovalent $C_1$-$C_{12}$ hydrocarbon group, $R^1$ and $R^2$ may bond together, $R^3$ is $C_1$-$C_3$ alkyl, m and n are independently 0 or 1, m+n is 0, 1 or 2, and a partial hydrolytic condensate thereof,

(D) a photo-polymerization initiator,

(E) a solvent,

(F) optional colloidal silica, and

(G) a polymerizable vinyl compound other than components (B) and (C),

the solids content of the urethane-modified vinyl polymer (B) being 1 to 30 parts by weight per 100 parts by weight of the total solids content of components (A), (C) and (F).

Component A

Component (A) is a water dispersion of core/shell type tetragonal titanium oxide solid-solution particles. Specifically, core/shell type tetragonal titanium oxide particles each consisting of a core of nano-particulate tetragonal titanium oxide having tin and manganese incorporated in solid solution and a shell of silicon oxide around the core are dispersed in an aqueous dispersing medium.

Titanium oxide (or titania) generally includes three crystal structures, rutile, anatase and brookite types. Herein titanium oxide of tetragonal rutile type is preferably used because it has a low photocatalytic activity and high UV-absorbing ability.

Tin and manganese form a solid solution with titanium oxide. The tin component as one solute is not particularly limited as long as it is derived from a tin salt. Included are tin oxide and tin chalcogenides such as tin sulfide, with tin oxide being preferred. Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability. Tin in the tin salt may have a valence of 2 to 4, with tetravalent tin being preferred.

The manganese component as another solute is not particularly limited as long as it is derived from a manganese salt. Included are manganese oxide and manganese chalcogenides such as manganese sulfide, with manganese oxide being preferred. Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability. Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of 10/1 to 1,000/1, preferably 15/1 to 300/1, and the amount of manganese incorporated in solid solution is to provide a molar ratio of titanium to manganese (Ti/Mn) of 10/1 to 1,000/1, preferably 15/1 to 300/1. If the amount of tin incorporated in solid solution form is too small, the crystal system transitions to anatase type to incur a blue shift of the absorption band, and the ability to absorb a wide range of UV radiation becomes insufficient. If the amount of tin is too large, the absorption coefficient in the UV region becomes low, indicating insufficient performance as UV absorber. If the amount of manganese incorporated in solid solution form is too small, the photocatalytic activity is not fully controlled, leading to poor weathering resistance. If the amount of manganese is too large, the absorption coefficient in the UV region becomes low, indicating insufficient performance as UV absorber.

The solid solution form of tin and manganese components in tetragonal titanium oxide may be either substitutional or interstitial. The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide. The interstitial type tends to create F-center

which causes coloring, and due to poor symmetry around a metal ion, the Franck-Condon factor of vibronic transition at the metal ion increases, leading to more absorption of visible light. For this reason, the substitution type is preferred.

The cores of nano-particulate tetragonal titanium oxide having tin and manganese incorporated in solid solution should have a volume basis 50% cumulative distribution diameter $D_{50}$ of up to 30 nm, preferably 5 nm to 20 nm, as measured by the dynamic light scattering method using laser light. If the diameter ($D_{50}$) of the cores exceeds 30 nm, undesirably the dispersion becomes opaque. If the diameter ($D_{50}$) of the cores is less than 5 nm, the dispersion may tend to agglomerate. Notably, the volume basis 50% cumulative distribution diameter ($D_{50}$, also known as "average particle size") can be as measured by Nanotrac UPA-EX150 (Nikkiso Co., Ltd.) or another instrument. Although the particle size distribution is not dependent on a particular instrument, measurements by Nanotrac UPA-EX150 are used herein.

A shell of silicon oxide is formed around the core of nano-particulate tetragonal titanium oxide having tin and manganese incorporated in solid solution. The shell may contain silicon oxide as the major component and another component(s) such as tin, aluminum and the like while it may be formed by any desired techniques. For example, the silicon oxide shell may be formed by hydrolytic condensation of a tetraalkoxysilane. Suitable tetraalkoxysilanes include commonly available ones such as tetramethoxysilane, tetraethoxysilane, tetra(n-propoxy)silane, tetra(i-propoxy)silane, and tetra(n-butoxy)silane. Of these, tetraethoxysilane is preferred from the standpoints of reactivity and safety. For example, useful tetraethoxysilane is commercially available under the tradename: KBE-04 from Shin-Etsu Chemical Co., Ltd. Hydrolytic condensation of a tetraalkoxysilane may be performed in water, optionally in the presence of a condensation catalyst such as ammonia, aluminum salts, organoaluminum compounds, tin salts, or organotin compounds. Inter alia, ammonia is especially preferred because it also serves as a dispersant for the nano-particulate cores.

Shells of silicon oxide are formed around cores of nano-particulate tetragonal titanium oxide having tin and manganese incorporated in solid solution, yielding core/shell type tetragonal titanium oxide particles. The silicon oxide shells preferably account for 25 to 45%, and more preferably 30 to 40% by weight based on the overall core/shell type tetragonal titanium oxide particles. If the shell amount is less than 25 wt%, then insufficient shell formation may lead to poor stability. If the shell amount exceeds 45 wt%, then the dispersion may become less transparent.

The core/shell type tetragonal titanium oxide solid-solution particles should have a volume basis 50% cumulative distribution diameter $D_{50}$ of up to 50 nm, preferably 5 nm to 30 nm, as measured by the dynamic light scattering method using laser light. If the diameter ($D_{50}$) of the core/shell type particles exceed 50 nm, undesirably the dispersion becomes less transparent. If the diameter ($D_{50}$) of the core/shell type particles is less than 5 nm, the dispersion may tend to agglomerate and become difficult to handle.

Examples of the aqueous dispersing medium in which core/shell type tetragonal titanium oxide solid-solution particles are dispersed include water and a mixture of water and a hydrophilic organic solvent in an arbitrary ratio. Water is preferably deionized water (ion exchanged water), distilled water, or pure water. Preferred hydrophilic organic solvents are alcohols such as methanol, ethanol, and isopropanol. An amount of the hydrophilic organic solvent, if mixed, is preferably 0 to 50% by weight based on the aqueous dispersing medium. Inter alia, deionized water or pure water is most preferred for productivity and cost.

In general, a polymeric dispersant is often used in dispersing inorganic oxide solid-solution particles in water. Although the polymeric dispersant functions to stick to surfaces of particles to increase their affinity to water, it may be unfavorable to use a polymeric dispersant in the practice of the present invention. In particular, if polymeric dispersant is used in dispersing core/shell type tetragonal titanium oxide solid-solution particles in an aqueous dispersing medium, it can later cause agglomeration to the silicone coating composition and haze to the coating. This is because the presence of a polymeric dispersant may interfere with smooth formation of bonds between hydroxyl groups on surfaces of core/shell type tetragonal titanium oxide solid-solution particles and component (C). In preferred embodiments of the invention, a basic dispersant is used in dispersing core/shell type tetragonal titanium oxide solid-solution particles in an aqueous dispersing medium. The basic dispersant may be selected from among ammonia, alkali metal salts, and compounds having the general formula (2) :

$$R^4R^5R^6R^7NOH \qquad (2)$$

wherein $R^4$, $R^5$, $R^6$, and $R^7$ are each independently hydrogen, or a $C_1$-$C_{10}$ alkyl, aryl or aralkyl group. Since the basic dispersant can maintain a proper disperse state by adjusting the electric charge condition of hydroxyl groups on surfaces of core/shell type tetragonal titanium oxide solid-solution particles and also function as a hydrolytic condensation catalyst for component (C), the basic dispersant can help to maintain component (A) in a proper disperse state not only in water, but also in silicone coating composition.

In formula (2), examples of the $C_1$-$C_{10}$ alkyl, aryl and aralkyl groups represented by $R^4$ to $R^7$ include alkyl groups such as methyl, ethyl, propyl, isopropyl, butyl, isobutyl, tert-butyl, pentyl, neopentyl, hexyl, cyclohexyl, and octyl, aryl groups such as phenyl, tolyl, anisyl, trifluoromethylphenyl, biphenyl, and naphthyl, and aralkyl groups such as benzyl, phenylethyl and phenylpropyl.

Exemplary of the compound having formula (2) are onium hydroxides including tetramethylammonium hydroxide (TMAH), ethyltrimethylammonium hydroxide, diethyldimethylammonium hydroxide, triethylmethylammonium hydroxide, tetraethylammonium hydroxide, tetra-n-propylammonium hydroxide, tetra-n-butylammonium hydroxide, tetra-n-pentylammonium hydroxide, tetra-n-hexylammonium hydroxide, tetracyclohexylammonium hydroxide, trimethylcyclohexylammonium hydroxide, trimethyl-t-butylammonium hydroxide, trimethylbenzylammonium hydroxide, triethylbenzylammonium hydroxide, tri-n-propylbenzylammonium hydroxide, tri-n-butylbenzylammonium hydroxide, tri-t-butylbenzylammonium hydroxide, and tetrabenzylammonium hydroxide.

Examples of the alkali metal salt which can be used as the dispersant include lithium hydroxide, sodium hydroxide, potassium hydroxide, cesium hydroxide, monolithium dihydrogenphosphate, monosodium dihydrogenphosphate, monopotassium dihydrogenphosphate, monocesium dihydrogenphosphate, dilithium hydrogenphosphate, disodium hydrogenphosphate, dipottasium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate.

The dispersant is preferably added in such an amount as to adjust component (A) at pH 7.0 to 13.0. The pH range to be adjusted is more preferably from pH 7.5 to 12.5, even more preferably from pH 8.0 to 12.0, and most preferably from pH 8.5 to 11.5. Below pH 7.0, undesirably the solid matter of component (A) may become liable to agglomerate with the lapse of time. Above pH 13.0, usually an ion exchange resin must be previously added in a large amount in order to adjust the pH of the liquid to the range contributing to the shelf stability of the silicone coating composition, that is, the range of preferably pH 2 to 7, more preferably pH 3 to 6, and this is undesirable in industrial efficiency. For example, when 0.2 g of 28 wt% aqueous ammonia is added to 100 g of a water dispersion of core/shell type tetragonal titanium oxide solid-solution particles, the resulting solution is approximately at pH 10. This addition amount ensures to achieve stability and subsequent pH adjustment in a compatible manner. While this addition amount is merely exemplary, an appropriate addition amount may be computed from the well-known chemical equilibrium theory, depending on the type and concentration of basic compound and the type of solvent.

The solids content of component (A), that is, the concentration of the core/shell type tetragonal titanium oxide solid-solution particles in the water dispersion consisting of the core/shell type tetragonal titanium oxide solid-solution particles and the aqueous dispersing medium is preferably 5 to 25% by weight, more preferably 8 to 20% by weight, and even more preferably 10 to 15% by weight. If the solids content of component (A) is less than 5 wt%, the concentration of the solids of component (A) in the silicone coating composition may be low, or even when the concentration is not low, the amount of water in the silicone coating composition may be excessive, whereby the composition is unbalanced. If the solids content of component (A) exceeds 25 wt%, the solids of component (A) may become liable to agglomerate with the lapse of time.

In the silicone coating composition, component (A), that is, the water dispersion of core/shell type tetragonal titanium oxide solid-solution particles is preferably added in an amount of 5 to 25% by weight, more preferably 10 to 25% by weight, and even more preferably 15 to 25% by weight, based on the solids content of the coating composition. If the amount of component (A) added is less than 5 wt%, the UV shielding capability may be insufficient. If the amount of component (A) added exceeds 25 wt%, substantial age contraction may occur, which is disadvantageous to weathering resistance.

## Component B

Component (B) is a polycarbonate and/or polyester-based urethane-modified vinyl polymer, which serves as an adhesion improver. In the cured film, component (B) is present as a separate phase from the silicone binder or component (C) and has a graded concentration in a thickness direction of the coating. So, it can serve to increase affinity to the organic resin substrate without any loss of mar resistance performance, thereby achieving adhesion.

The polycarbonate and/or polyester-based urethane-modified vinyl polymer as component (B) is a vinyl-based polymer having polycarbonate or polyester-based urethane grafted thereto. Illustratively, the polymer is preferably a vinyl-based polymer having as side chain a polycarbonate or polyester-based urethane obtained from reaction of an aliphatic polycarbonate diol or aliphatic polyester diol with an aromatic diisocyanate, more preferably a vinyl-based polymer having as side chain a polycarbonate-based urethane obtained from reaction of an aliphatic polycarbonate diol with an aromatic diisocyanate.

Examples of the aliphatic polycarbonate diol or aliphatic polyester diol include 1,4-tetramethylene, 1,5-pentamethylene, 1,6-hexamethylene, 1,12-dodecane, and 1,4-cyclohexane types and mixtures thereof. Examples of the aromatic diisocyanate include 4,4'-diphenylmethane diisocyanate, 2,4-tolylene diisocyanate, 2,6-tolylene diisocyanate, m-xylene diisocyanate, naphthalene diisocyanate, and mixtures thereof. By reacting such a diol with a diisocyanate in a standard manner, a polycarbonate-based polyurethane is obtainable.

As the monomer from which the vinyl-based polymer is derived, any monomer having a polymerizable vinyl

group may be used. Suitable monomers include methyl (meth)acrylate, ethyl (meth)acrylate, butyl (meth)acrylate, cyclohexyl (meth)acrylate, glycidyl (meth)acrylate, 2-hydroxyethyl (meth)acrylate, (meth)acrylic acid, styrene, and vinyl acetate. By polymerizing such a monomer or monomers in a standard manner, a vinyl-based polymer is obtainable.

The urethane-modified vinyl polymer as component (B) is preferably available as an organic solvent solution because of ease of synthesis and ease of handling. The organic solvent used herein is preferably a relatively polar organic solvent in which component (B) is readily dissolved. Suitable organic solvents include alcohols such as isopropyl alcohol, n-butanol, isobutanol, t-butanol, and diacetone alcohol, ketones such as methyl ethyl ketone, diethyl ketone, methyl isobutyl ketone, cyclohexanone, and diacetone alcohol, ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate, and esters such as ethyl acetate, propyl acetate, butyl acetate, and cyclohexyl acetate.

The polycarbonate and/or polyester-based urethane-modified vinyl polymer as component (B) should preferably have a weight average molecular weight (Mw) of 5,000 to 50,000, more preferably 7,000 to 40,000, as measured versus polystyrene standards by GPC. If Mw < 5,000, sufficient adhesion to the organic resin substrate may not be available. If Mw > 50,000, component (B) may become less soluble in the composition or separate out, and the cured film may become less transparent.

The polycarbonate and/or polyester-based urethane-modified vinyl polymer as component (B) preferably has a hydroxyl number of at least 10% by weight, more preferably 20 to 100% by weight, based on the solids content of component (B). If the hydroxyl number of component (B) is less than 10 wt%, component (B) may become less soluble in the composition or separate out. As used herein, the term "solids content" refers to the component(s) excluding the solvent. Although component (B) may be used as such, it is preferably used as an organic solvent solution because of ease of synthesis and ease of handling, as alluded to previously. The organic solvent used herein is preferably a relatively polar organic solvent in which component (B) is readily dissolved. Suitable organic solvents include alcohols such as isopropyl alcohol, n-butanol, isobutanol, t-butanol, and diacetone alcohol, ketones such as methyl ethyl ketone, diethyl ketone, methyl isobutyl ketone, cyclohexanone, and diacetone alcohol, ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate, and esters such as ethyl acetate, propyl acetate, butyl acetate, and cyclohexyl acetate. For component (B) consisting of the urethane-modified vinyl polymer and an organic solvent having a hydroxyl group as functionality, when the hydroxyl number of component (B) is measured without taking into account the "solids content", the measured hydroxyl number includes the hydroxyl number of the solvent. The hydroxyl number including the hydroxyl number assigned to the solvent does not function as an effective index in the practice of the invention. Accordingly, the hydroxyl number of the solids content of component (B) should be measured. The hydroxyl number of the solids content of component (B) may be measured by volatilizing off the solvent from component (B) and measuring the hydroxyl number by the customary method.

It is noted that component (B) is commercially available, for example, under the trade name of Akurit 8UA-347, 357 and 366 (polycarbonate base) and Akurit 8UA-140, 146, 301 and 318 (polyester base) from Taisei Fine Chemical Co., Ltd.

The polycarbonate and/or polyester-based urethane-modified vinyl polymer as component (B) is preferably used in an amount of 1 to 30 parts by weight, more preferably 3 to 25 parts by weight per 100 parts by weight of the total solids content of components (A), (C) and (F). If the amount of component (B) used is less than 1 wt%, adhesion to the organic resin substrate may not be exerted. If the amount of component (B) used exceeds 30 wt%, mar resistance may be reduced.

Component C

Component (C) is a hydrolytic condensate obtained (or, as obtainable) by (co)hydrolytic condensation of at least one sulfur-free alkoxysilane having the general formula (1):

$$R^1_mR^2_nSi(OR^3)_{4-m-n} \qquad (1)$$

wherein $R^1$ and $R^2$ are each independently hydrogen or a substituted or unsubstituted, monovalent $C_1$-$C_{12}$ hydrocarbon group, $R^1$ and $R^2$ may bond together, $R^3$ is $C_1$-$C_3$ alkyl, m and n are independently 0 or 1, m+n is 0, 1 or 2, or of a partial hydrolytic condensate thereof.

In formula (1), $R^1$ and $R^2$ are each independently selected from hydrogen and substituted or unsubstituted monovalent hydrocarbon groups having 1 to 12 carbon atoms, preferably 1 to 8 carbon atoms, for example, hydrogen; alkyl groups such as methyl, ethyl, propyl, butyl, pentyl, hexyl, heptyl, and octyl; cycloalkyl groups such as cyclopentyl and cyclohexyl; alkenyl groups such as vinyl and allyl; aryl groups such as phenyl; halogenated hydrocarbon groups such as chloromethyl, γ-chloropropyl, and 3,3,3-trifluoropropyl; (meth)acryloxy, epoxy, amino or isocyanate-substituted

hydrocarbon groups such as γ-(meth)acryloxypropyl, γ-glycidoxypropyl, 3,4-epoxycyclohexylethyl, γ-aminopropyl, and γ-isocyanatopropyl. Also included is an isocyanurate group resulting from bonding of isocyanate moieties in a plurality of isocyanate-substituted hydrocarbon groups. Of these, alkyl groups are preferred in the application where mar resistance and weathering resistance are required, and epoxy, (meth)acryloxy and isocyanurate-substituted hydrocarbon groups are preferred in the application where toughness and dyeability are required. Particularly from the aspect of activation energy radiation cure, (meth)acryloxy-substituted hydrocarbon groups, specifically γ-(meth)acryloxypropyl are preferred. Notably, $R^1$ and $R^2$ are free of sulfur. Component (C) can then be sulfur-free.

$R^3$ is a $C_1$-$C_3$ alkyl group such as methyl, ethyl, n-propyl or i-propyl. Of these, methyl and ethyl are preferred because hydrolytic condensation proceeds at a high reactivity and the resulting alcohol $R^3OH$ has a high vapor pressure and is easy to distill off.

A first class of alkoxysilanes of formula (1) wherein m=0 and n=0 is (c-1) a tetraalkoxysilane of the formula: $Si(OR^3)_4$ or a partial hydrolytic condensate thereof. Examples of the tetraalkoxysilane and partial hydrolytic condensate thereof include tetramethoxysilane, tetraethoxysilane, tetraisopropoxysilane, tetrabutoxysilane, partial hydrolytic condensates of tetramethoxysilane which are commercially available under the tradename of M Silicate 51 from Tama Chemicals Co., Ltd., MSI51 from Colcoat Co., Ltd., MS51 and MS56 from Mitsubishi Chemical Co., Ltd., partial hydrolytic condensates of tetraethoxysilane which are commercially available under the tradename of Silicate 35 and Silicate 45 from Tama Chemicals Co., Ltd., ESI40 and ESI48 from Colcoat Co., Ltd., partial co-hydrolytic condensates of tetramethoxysilane and tetraethoxysilane which are commercially available under the tradename of FR-3 from Tama Chemicals Co., Ltd., and EMSi48 from Colcoat Co., Ltd.

A second class of alkoxysilanes of formula (1) wherein m=1 and n=0 or m=0 and n=1 is (c-2) a trialkoxysilane of the formula: $R^1Si(OR^3)_3$ or $R^2Si(OR^3)_3$ or a partial hydrolytic condensate thereof. Examples of the trialkoxysilane and partial hydrolytic condensate thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl) isocyanurate and tris(3-triethoxysilylpropyl) isocyanurate where isocyanate groups are bonded together, 4-trimethoxysilylpropyloxy-2-hydroxybenzophenone, partial hydrolytic condensates of methyltrimethoxysilane which are commercially available under the tradename of KC-89S and X-40-9220 from Shin-Etsu Chemical Co., Ltd., partial hydrolytic condensates of methyltrimethoxysilane and γ-glycidoxypropyltrimethoxysilane which are commercially available under the tradename of X-41-1056 from Shin-Etsu Chemical Co., Ltd.

A third class of alkoxysilanes of formula (1) wherein m=1 and n=1 is (c-3) a dialkoxysilane of the formula: $R^1R^2Si(OR^3)_2$ or a partial hydrolytic condensate thereof. Examples of the dialkoxysilane and partial hydrolytic condensate thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-acryloxypropylmethyldimethoxysilane, γ-acryloxypropylmethyldiethoxysilane, γ-aminopropylmethyldiethoxysilane, and N-(2-aminoethyl)aminopropylmethyldimethoxysilane.

The hydrolytic condensate as component (C) may be prepared using the foregoing (c-1), (c-2) and (c-3) alone or in a combination of two or more in an arbitrary ratio. For shelf stability, mar resistance and crack resistance, it is preferred to use 0 to 50 Si-mol% of (c-1), 50 to 100 Si-mol% of (c-2), and 0 to 10 Si-mol% of (c-3), provided that the total of (c-1), (c-2) and (c-3) is 100 Si-mol%; and it is more preferred to use 0 to 30 Si-mol% of (c-1), 70 to 100 Si-mol% of (c-2), and 0 to 10 Si-mol% of (c-3). If the main component (c-2) is less than 50 Si-mol%, the condensate or resin may have a lower crosslinking density and less curability, tending to form a cured film with a lower hardness. If component (c-1) is in excess of 50 Si-mol%, the resin may have a higher crosslinking density and a lower toughness to permit crack formation.

It is noted that Si-mol% is a percentage based on the total Si moles, and the Si mole means that in the case of a monomer, its molecular weight is 1 mole, and in the case of a dimer, its average molecular weight divided by 2 is 1 mole.

The hydrolytic condensate as component (C) may be prepared through (co)hydrolytic condensation of one or more of components (c-1), (c-2), and (c-3) by a well-known method. For example, an alkoxysilane (c-1), (c-2) or (c-3) or partial hydrolytic condensate thereof alone or a mixture thereof is (co)hydrolysed in water at pH 1 to 7, preferably pH 2 to 7. At this point, component (A) and metal oxide nanoparticles dispersed in water such as silica sol are preferably used. A catalyst may be added to the system for adjusting its pH to the described range and to promote hydrolysis.

Suitable catalysts include organic acids and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, solid acid catalysts such as cation exchange resins having carboxylate or sulfonate groups on the surface, and water-dispersed metal oxide nanoparticles such as acidic water-dispersed colloidal silica. Alternatively, a dispersion of metal oxide nanoparticles in water or organic solvent such as colloidal silica may be co-present upon hydrolysis.

In this hydrolysis, water may be used in an amount of 20 to 3,000 parts by weight per 100 parts by weight of the total of alkoxysilanes (c-1), (c-2) and (c-3) and partial hydrolytic condensates thereof. An excess of water may lower system efficiency and in a final coating composition, residual water can adversely affect coating operation and drying. Water is preferably used in an amount of 50 to 150 parts, especially 50 to 100 parts by weight for the purpose of improving storage stability, mar resistance, and crack resistance. With a smaller amount of water, the hydrolytic condensate may fail to reach a Mw in the optimum range (described later), as measured by GPC versus polystyrene standards. With an excess of water, the content in the hydrolytic condensate of units $R'SiO_{3/2}$ in units $R'SiO_{(3-p)/2}(OZ)_p$ derived from component (c-2) may fail to reach the optimum range to maintain a coating crack resistant wherein R' is $R^1$ or $R^2$, Z is hydrogen or $R^3$, $R^1$, $R^2$, and $R^3$ are as defined above, and p is an integer of 0 to 3.

Hydrolysis may be effected by adding dropwise or pouring water to the alkoxysilane or partial hydrolytic condensate, or inversely by adding dropwise or pouring the alkoxysilane or partial hydrolytic condensate to water. The reaction system may contain an organic solvent. However, the absence of organic solvent is preferred because there is a tendency that as the reaction system contains more organic solvent, the resulting hydrolytic condensate has a lower Mw as measured by GPC versus polystyrene standards.

To produce the hydrolytic condensate (C), the hydrolysis must be followed by condensation. Condensation may be effected continuous to the hydrolysis while maintaining the liquid temperature at room temperature or heating at a temperature of not higher than 100°C. A temperature higher than 100°C may cause gelation. Condensation may be promoted by distilling off the alcohol formed by hydrolysis at a temperature of at least 80°C and atmospheric or subatmospheric pressure. Also for the purpose of promoting condensation, condensation catalysts such as basic compounds, acidic compounds or metal chelates may be added. Prior to or during the condensation step, an organic solvent may be added for the purpose of adjusting the progress of condensation or the concentration, or a dispersion of metal oxide nanoparticles in water or organic solvent such as colloidal silica may also be added. For the reason that a hydrolytic condensate generally builds up its molecular weight and reduces its solubility in water or formed alcohol as condensation proceeds, the organic solvent added herein should preferably be one having a boiling point of at least 80°C and a relatively high polarity in which the hydrolytic condensate is fully dissolvable. Examples of the organic solvent include alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate (PGMEA); and esters such as propyl acetate, butyl acetate, and cyclohexyl acetate.

Preferably component (C) is prepared in the step of mixing with component (A) in the process for the preparation of the silicone coating composition, via reaction with water available from component (A).

The hydrolytic condensate resulting from condensation should preferably have a weight average molecular weight (Mw) of at least 1,500, more preferably 1,500 to 50,000, and even more preferably 2,000 to 20,000, as measured by GPC versus polystyrene standards. With a Mw below the range, a coating tends to be less tough and prone to cracking. On the other hand, a hydrolytic condensate with too high a Mw tends to have a low hardness and the hydrolytic condensate in a coating may undergo phase separation, causing the coating to be whitened.

Component (C) is preferably used in an amount of 10 to 90% by weight, more preferably 20 to 80% by weight, and most preferably 30 to 80% by weight based on the total solids content of the composition.

Component (C) may contain (C-1) a siloxane resin having the average compositional formula (3).

$$R^8_aSi(OR^9)_b(OH)_cO_{(4-a-b-c)/2} \qquad (3)$$

Herein $R^8$ is each independently a $C_1$-$C_{18}$ organic group, $R^9$ is each independently a $C_1$-$C_4$ organic group, a, b and c are numbers in the range: $0.8 \leq a \leq 1.5$, $0.8 \leq b \leq 0.3$, $0.8 \leq c \leq 0.5$, and $0.8 \leq a+b+c < 2$. The siloxane resin is solid at or below 40°C and has a Mw of at least 2,000, preferably 2,000 to 10,000, as measured versus polystyrene standards by GPC.

The siloxane resin as component (C-1) functions to impart flexibility to the cured film to prevent cracks or defects while maintaining the high hardness of the film. This function is obtainable because component (C-1) has a relatively small amount of terminal groups ($OR^9$ and OH), participates in the crosslinking reaction of the coating composition to a limited extent, and plays the role of a buffer for filling the interstices of crosslinking network therewith. If the amount of terminal groups is too small, the siloxane resin is not tenaciously fixed within the coating, which is detrimental to solvent

resistance or the like. Therefore, the siloxane resin as component (C-1) should have an amount of terminal groups which is relatively small, but enough to form bonds with components (C) and (A) to a limited extent so that it may be fixed within the film.

The inclusion of component (C-1) serves to alter the surface state of the cured coating. For example, the surface of the cured coating becomes repellent to commercially available marker ink.

In formula (3), $R^8$ which may be the same or different is an organic group of 1 to 18 carbon atoms, preferably 1 to 10 carbon atoms. Suitable organic groups are substituted or unsubstituted monovalent hydrocarbon groups, for example, alkyl, aryl, aralkyl, alkenyl, and halo-substituted alkyl groups, with alkyl and aryl groups being preferred. Examples include methyl, ethyl, propyl, butyl, hexyl, octyl, decyl, cyclopentyl, cyclohexyl, phenyl, vinyl, and trifluoropropyl.

$R^9$ which may be the same or different is a $C_1$-$C_4$ organic group, preferably alkyl or alkenyl group. $OR^9$ represents a terminal group on the siloxane resin other than the silanol group (Si-OH). Examples of $OR^9$ include methoxy, ethoxy, propoxy, and butoxy. Inter alia, methoxy and ethoxy are preferable because of availability of reactant.

The subscripts a, b and c are numbers in the range: $0.8 \le a \le 1.5$, $0.8 \le b \le 0.3$, $0.8 \le c \le 0.5$, and $0.801 \le a+b+c < 2$; preferably $0.9 \le a \le 1.3$, $0.001 \le b \le 0.2$, $0.01 \le c \le 0.3$, and $0.911 \le a+b+c \le 1.8$. If "a" indicative of the content of $R^8$ is less than 0.8, then crack resistance drops. If "a" exceeds 1.5, then the resin becomes more hydrophobic due to more organic groups and less compatible with the cured film so that it may bleed out of the film, losing the crack-preventing effect and causing appearance defectives like cissing. If b indicative of the content of $OR^9$ exceeds 0.3, which means a more amount of terminal groups, then the resin participates in condensation reaction with components (C) and (A) in a higher proportion, failing to exert the crack-preventing effect. The content of alkoxy and other groups can be quantitatively determined by infrared (IR) absorption spectroscopy or the alcohol quantitative analysis based on alkali cracking. If c indicative of the content of OH exceeds 0.5, then the resin participates in condensation reaction with components (C) and (A) upon heat curing in a higher proportion, leading to a high hardness and a lack of crack resistance. If c is less than 0.001, then the resin does not at all form bonds with components (C) and (A) and is not fixed within the film, leading to drops of hardness and solvent resistance.

The values of a, b and c can be determined by analyzing a resin by $^{29}$Si-NMR spectroscopy and computing the average chemical structure for the resin. For structural units (T0 to T3) of four types shown below among T units ($RSiO_{3/2}$) synthesized from a trifunctional hydrolysable silane, for example, signals are observed at different chemical shifts in the $^{29}$Si-NMR spectrum. Since the area of this signal indicates an abundance ratio of the corresponding structure, the structure of a siloxane resin can be computed from the abundance ratio and the amount of residual alkoxy groups determined from an IR spectrum.

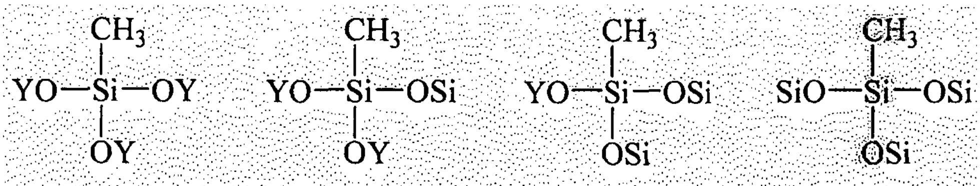

(T0) (T1) (T2) (T3)

Herein Y is hydrogen or $R^9$.

The siloxane resin as component (C-1) is solid at or below 40°C. When the siloxane resin is liquid at or below 40°C, the coating may have a low hardness and low solvent resistance even if bonds form between the siloxane resin as component (C-1) and components (C) and (A) upon heat curing. The siloxane resin as component (C-1) should preferably have a volatile content of up to 2% by weight upon drying at 105°C for 3 hours. A siloxane resin with a volatile content of more than 2% by weight, which is solid, may flow or fuse at or below 40°C and be inconvenient to work.

The molecular weight of the siloxane resin may be determined by GPC analysis. The siloxane resin has a Mw of at least 2,000, preferably 2,000 to 10,000, as measured versus polystyrene standards by GPC. A siloxane resin with a Mw of less than 2,000 contains more terminal groups which participate in crosslinking, losing crack inhibition. A siloxane resin with an excessive Mw may be less compatible with components (C) and (A), and so the coating becomes opaque.

Preferably the siloxane resin has a softening point of 60 to 90°C. If the softening point is lower than 60°C, then the cured film may have a low hardness and low wear resistance. If the softening point exceeds 90°C, the compatibility with components (C) and (A) and crack resistance may be reduced. It is noted that the softening point is measured by the ring-and-ball test according to JIS K-2207.

In general, a siloxane resin may be represented by a combination of Q units ($SiO_{4/2}$) derived from a tetrafunctional silane, T units ($R^{10}SiO_{3/2}$) derived from a trifunctional silane, D units ($R^{10}SiO_{2/2}$) derived from a difunctional silane, and M units ($R^{10}SiO_{1/2}$) derived from a monofunctional silane. When component (C-1) is represented by this nomenclature,

a proportion of moles of T units ($R^{10}SiO_{3/2}$) is preferably at least 70 mol% based on the total moles of all siloxane units. If a proportion of T units is less than 70 mol%, an overall profile of hardness, abrasion resistance, adhesion, ease of coating and outer appearance may be disrupted. The balance may consist of M, D and Q units, and the sum of these units is preferably up to 30 mol%.

In siloxane units T ($R^{10}SiO_{3/2}$), $R^{10}$ which may be the same or different is a $C_1$-$C_{18}$ organic group, and preferably at least 80 mol% of $R^{10}$ is a $C_1$-$C_6$ organic group.

While those groups exemplified for $R^8$ are applicable to $R^{10}$, preferably at least 80 mol% of $R^{10}$ is a $C_1$-$C_6$ monovalent hydrocarbon group, especially alkyl group. Among examples of the $C_1$-$C_6$ monovalent hydrocarbon group, methyl, ethyl, propyl, butyl, pentyl, hexyl, cyclopentyl, and cyclohexyl are preferred from the aspects of hardness, abrasion resistance, adhesion and compatibility, with methyl, ethyl and propyl being most preferred.

When the siloxane resin as component (C-1) is compounded, an organic solvent solution of the siloxane resin may be previously prepared and mixed with the other components. This order is preferable because heat is sometimes necessary when the siloxane resin is dissolved in a solvent. Preferred examples of the solvent used herein include, but are not limited to, ethanol, isopropanol, isobutanol, propylene glycol monoalkyl ethers, and diacetone alcohol.

For the preparation of the siloxane resin as component (C-1), a prior art well-known resin preparation method may be applied. In this method, a polymer is prepared by adding water to at least one hydrolysable silane compound alone or in admixture with an organic solvent, stirring the mixture, thereby contacting the hydrolysable silane compound with water to perform hydrolytic reaction, reacting silanol groups resulting from hydrolysis with each other or with another hydrolysable group to form a siloxane bond (-Si-O-Si-), thereby achieving polycondensation. After polymerization, the reaction mixture is neutralized. Finally, the organic solvent is distilled off, yielding a siloxane resin in solid form. Unlike solvent-insoluble gel, this solid resin can be dissolved in an organic solvent again. The method for the preparation of a siloxane resin to be used as component (C-1) is more advantageous when hydrolysis is performed under strongly acidic conditions, typically at pH 2 or below. Under such strongly acidic conditions, silanol groups contributing to polycondensation reaction are unstable as compared under weakly acidic conditions, allowing reactions to take place rapidly in sequence to form a higher molecular weight compound.

An appropriate amount of water used in hydrolysis may be determined depending on the type of hydrolysable group on a silane used as the reactant. When the reactant is an alkoxysilane, water is preferably less than 1.5 moles, more preferably 0.6 to 1.0 mole per mole of hydrolysable group. If the amount of water for hydrolysis is at least 1.5 moles during polycondensation reaction under strongly acidic conditions, then rapid condensation takes place in a three-dimensional manner, undesirably leading to gelation. When the reactant is a chlorosilane, the amount of water for hydrolysis is not particularly limited.

For hydrolysis, an organic solvent may be used, preferably a nonpolar solvent which is less miscible with water. For example, hydrocarbon solvents such as toluene, xylene and hexane are advantageously used. If an organic solvent is extremely immiscible with water, hydrolysis reaction may be retarded. In such a case, a polar solvent such as alcohols may be used along with the organic solvent.

The hydrolysable silane compound used as the reactant may be the same as the compound of formula (1) or a corresponding chlorosilane. Suitable silane compounds include vinyltrimethoxysilane, vinyltriethoxysilane, vinylmethyldimethoxysilane, vinylmethyldiethoxysilane, tetramethoxysilane, tetraethoxysilane, methyltrimethoxysilane, dimethyldimethoxysilane, methyltriethoxysilane, methyltriisopropoxysilane, propyltrimethoxysilane, propyltriethoxysilane, hexyltrimethoxysilane, phenyltrimethoxysilane, and diphenyldimethoxysilane. Inter alia, vinyltrimethoxysilane, vinyltriethoxysilane, methyltrimethoxysilane, dimethyldimethoxysilane, and phenyltrimethoxysilane are preferred.

An appropriate amount of component (C-1) used is 1 to 50%, more preferably 2 to 35%, and even more preferably 3 to 20% by weight based on component (C). If the proportion of component (C-1) is too high, the cured film may have low hardness and wear resistance.

Component D

The inventive composition contains as component (D) any of photopolymerization initiators commonly used in acrylic coating compositions. Suitable photopolymerization initiators include alkylphenones such as 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)-phenyl]-2-hydroxy-2-methyl-1-propan-1-one, and methyl phenylglyoxylate; aminoalkylphenones such as 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; and phosphine oxides such as 2,4,6-trimethylbenzoyldiphenylphosphine oxide and bis(2,4,6-trimethylbenzoyl)phenylphosphine oxide.

An appropriate amount of the photopolymerization initiator used is 0.1 to 20 parts, more preferably 1 to 15 parts, and even more preferably 3 to 10 parts by weight per 100 parts by weight of the total solids content of the composition. Less than 0.1 part of the initiator may be insufficient to promote cure whereas more than 20 parts may result in a cured film having a low surface hardness.

Besides the photo-initiators, condensation catalysts are also useful as the curing catalyst. Curing catalysts commonly used in silicone coating compositions are useful. Specifically curing catalysts capable of promoting condensation reaction of condensable groups such as silanol and alkoxy groups in the hydrolytic condensate (C) are useful. Examples include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetrabutylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, titanium acetylacetonate, aluminum triisobutoxide, aluminum triisopropoxide, tris(acetylacetonato)aluminum, diisopropoxy(ethyl acetoacetate)aluminum, aluminum perchlorate, aluminum chloride, cobalt octylate, acetylacetonatocobalt, acetylacetonatoiron, acetylacetonatotin, dibutyltin octylate, and dibutyltin laurate; and acidic compounds such as p-toluenesulfonic acid and trichloroacetic acid. Inter alia, sodium propionate, sodium acetate, sodium formate, trimethylbenzylammonium hydroxide, tetramethylammonium hydroxide, tetrabutylammonium hydroxide, tris(acetylacetonato)aluminum, and diisopropoxy(ethyl acetoacetate)aluminum are preferred.

Another useful curing catalyst is such that the coating composition loaded with this catalyst becomes shelf stable while remaining curable and crack resistant. It is a compound containing no aromatic in the molecule, represented by the general formula (4).

$$[R^{11}R^{12}R^{13}R^{14}M]^{+}\cdot X^{-} \qquad (4)$$

Herein $R^{11}$, $R^{12}$, $R^{13}$ and $R^{14}$ are each independently a $C_1$-$C_{18}$ alkyl group which may be substituted with halogen, each of $R^{11}$, $R^{12}$, $R^{13}$ and $R^{14}$ has a Taft-Dubois steric substituent constant Es, the total of constants Es of $R^{11}$, $R^{12}$, $R^{13}$ and $R^{14}$ is equal to -0.5 or more negative, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k0)$$

wherein k is a rate of acidic esterification reaction of a substituted carboxylic acid under specific conditions and k0 is a rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In formula (4), the total of constants Es of $R^{11}$, $R^{12}$, $R^{13}$ and $R^{14}$ should be equal to or more negative than -0.5. If the total of constants Es is above -0.5, a coating composition becomes low in shelf stability and forms a coat which can be cracked or whitened in a water-resistant test and loses adhesion, especially water-resistant adhesion and boiling adhesion. In the event the total of constants Es is above -0.5, for example, $R^{11}$, $R^{12}$, $R^{13}$ and $R^{14}$ are all methyl, a corresponding catalyst of formula (4) becomes higher in catalytic activity, but a coating composition comprising the same tends to lose shelf stability and a coating thereof becomes so hygroscopic as to develop defects in a water-resistant test. The total of constants Es of $R^{11}$, $R^{12}$, $R^{13}$ and $R^{14}$ is preferably not lower than -3.2, and more preferably not lower than -2.8.

In formula (4), $R^{11}$, $R^{12}$, $R^{13}$ and $R^{14}$ are alkyl groups of 1 to 18 carbon atoms, preferably 1 to 12 carbon atoms, which may be substituted with halogen, for example, alkyl groups such as methyl, ethyl, propyl, butyl, pentyl, hexyl, heptyl, and octyl; cycloalkyl groups such as cyclopentyl and cyclohexyl; and halo-alkyl groups such as chloromethyl, γ-chloropropyl and 3,3,3-trifluoropropyl.

M is an ammonium or phosphonium cation. $X^-$ is a halide anion, hydroxide anion or $C_1$-$C_4$ carboxylate anion, and preferably a hydroxide anion or acetate anion.

Illustrative examples of the curing catalyst having formula (4) include, but are not limited to, hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-tert-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-tert-butylphosphonium hydroxide; salts of the foregoing hydroxides with halogenic acids and with $C_1$-$C_4$ carboxylic acids. Inter alia, tetrapropylammonium hydroxide, tetrapropylammonium acetate, tetrabutylammonium hydroxide, tetrabutylammonium acetate, tetrabutylphosphonium hydroxide, and tetrabutylphosphonium acetate are preferred. These may be used alone or in admixture of two or more, or in combination with any of the aforementioned well-known curing catalysts.

The amount of the condensation catalyst used is not particularly limited as long as it is effective for curing component (C). Preferably the condensation catalyst is used in an amount of 0 to 30%, more preferably 0.0001 to 30%, and even more preferably 0.001 to 10% by weight based on the total solids content of components (A) and (C). Less than 0.0001 wt% of the catalyst may be insufficient to promote cure, leading to a drop of hardness. With more than 30 wt% of the catalyst, the cured film may become liable to crack and lose water resistance.

Component E

Component (E) is a solvent which is not particularly limited as long as solids in components (A) to (D) are uniformly dissolved or dispersed therein. A solvent based on a highly polar organic solvent is preferred. Exemplary solvents include alcohols such as methanol, ethanol, isopropyl alcohol, n-butanol, isobutanol, tert-butanol, cyclopentanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether (PGM), and propylene glycol monomethyl ether acetate (PGMEA); esters such as ethyl acetate, propyl acetate, butyl acetate, and cyclohexyl acetate; and water. The solvents may be used alone or in admixture. A solvent selected from water, alcohols, and ketones and mixtures thereof is preferred.

Component (E) is preferably added in such amounts that the silicone coating composition may have a solids concentration of 10 to 50%, more preferably 15 to 40% by weight. Outside the range, a coating obtained by applying and curing the composition may be defective. Specifically, a concentration below the range may lead to a coating which is likely to sag, wrinkle or mottle, failing to provide the desired hardness and mar resistance. A concentration beyond the range may lead to a coating which is prone to brushing, whitening or cracking.

Component F

Component (F) is colloidal silica. Particularly when it is desired to enhance the hardness and mar resistance of a coating, an appropriate amount of colloidal silica may be added. It is a colloidal dispersion of nano-size silica having a particle size of about 5 to 50 nm in a medium such as water or organic solvent. Commercially available water-dispersed or organic solvent-dispersed colloidal silica may be used herein. Examples include Snowtex-O, OS, OL and Methanol Silica Sol by Nissan Chemical Industries, Ltd.

The colloidal silica may be compounded in an amount of 0 to 100 parts, preferably 5 to 100 parts, and more preferably 5 to 50 parts by weight of solids per 100 parts by weight of the total solids content of components (A) and (C). If the colloidal silica is more than 100 parts as solids, the silicone coating composition may gel and/or a coating may lose flexibility.

Component G

Component (G) is a polymerizable vinyl compound. It is preferably selected from functional unsaturated compounds such as vinyl chloride, vinyl acetate and (meth)acrylates, more preferably from (meth)acrylic esters containing at least one ester bond in the molecule, derived from (meth)acrylic acids and polyhydric alcohols. Suitable (meth)acrylates include monoesters such as methyl methacrylate (MMA), methyl acrylate (MA), ethyl methacrylate, ethyl acrylate, hydroxyethyl acrylate (HEA), hydroxyethyl methacrylate (HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, methoxyethyl acrylate, methoxypolyethylene glycol acrylate, 2-methyl-2-ethyl-1,3-dioxolan-4-yl acrylate, [{cyclohexanespiro-2-(1,3-dioxolan-4-yl)}methyl] acrylate, and [(3-ethyloxetan-3-yl)methyl] acrylate; diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerol 1,2-diacrylate, glycerol 1,3-diacrylate, pentaerythritol diacrylate, 2-hydroxy-3-acryloyloxypropyl methacrylate, tricyclodecane dimethanol diacrylate, dipropylene glycol diacrylate, and tripropylene glycol diacrylate; and polyfunctional esters such as glycerol triacrylate, trimethylolpropane triacrylate, pentaerythritol triacrylate, dipentaerythritol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, and trispentaerythritol octaacrylate. The

(meth)acrylates are effective for enhancing the function of the coating composition by reducing the cure time and imparting photo-curability and flexibility while maintaining the benefits of the invention.

Component (G) is preferably added in an amount of 1 to 200 parts, more preferably 10 to 150 parts, and even more preferably 30 to 120 parts by weight per 100 parts by weight of the total solids content of components (A), (C), and (F). Less than 1 part of component (G) may lead to undercure whereas more than 200 parts may fail to achieve the desired weathering resistance.

Miscellaneous components

If desired, suitable additives may be added to the silicone coating composition insofar as they do not adversely affect the invention. Suitable additives include pH adjustors, leveling agents, thickeners, pigments, dyes, metal oxide nanoparticles, metal powder, antioxidants, UV stabilizers, heat ray reflecting/absorbing agents, flexibilizers, antistatic agents, anti-staining agents, and water repellents.

For enhanced storage stability, the silicone coating composition may preferably be adjusted to pH 2 to 7, more preferably pH 3 to 6. Since storage stability may lower at a pH level outside the range, a pH adjustor may be added so that the pH falls in the range. For a silicone coating composition having a pH value outside the range, if the pH is more acidic than the range, a basic compound such as ammonia or ethylenediamine may be added for pH adjustment. If the pH is more basic than the range, an acidic compound such as hydrochloric acid, nitric acid, acetic acid or citric acid may be added for pH adjustment. The pH adjustment method is not particularly limited.

Coated article

The silicone coating composition may be applied to at least one surface of a substrate directly. It is then cured to yield a coated article. The substrate used herein is not particularly limited and includes molded plastics, wood items, ceramics, glass, metals, and composites thereof. Of these, plastic materials or organic resin substrates are preferred. Examples include polycarbonate, polystyrene, acrylic resins, modified acrylic resins, urethane resins, thiourethane resins, polycondensates of halogenated bisphenol A and ethylene glycol, acrylic urethane resins, halogenated aryl-containing acrylic resins, and sulfur-containing resins. These resin substrates which have been surface treated, specifically by conversion treatment, corona discharge treatment, plasma treatment, acid or alkaline treatment are also useful. Also included are laminated substrates comprising a resin substrate and a surface layer formed thereon from a resin of different type from the substrate. Exemplary laminated substrates include those consisting of a polycarbonate resin substrate and a surface layer of acrylic resin or urethane resin which are prepared by co-extrusion or lamination technique, and those consisting of a polyester resin substrate and a surface layer of acrylic resin formed thereon.

Particularly when polycarbonate is used as the substrate, the silicone coating composition may be applied thereto directly, i.e., without interposing an undercoat layer of primer or the like, thereby forming a coating tenaciously adherent to the substrate. This is accounted for by the mechanism that component (B) in the silicone coating composition segregates in the coating toward the substrate to a high concentration where it serves as a tackifier component.

Suitable polycarbonate substrates are commercially available, for example, under the trade name of Iupilon series from Mitsubishi Engineering Plastics Co., Ltd., Makrolon series from Bayer Material Science, Panlite series from Teijin Ltd., Lexan series from SABIC, and PCSP series from Takiron Co., Ltd. An appropriate substrate may be selected from these depending on thickness and physical properties.

After the coating composition is applied, the coating is preferably cured with activation energy radiation. The activation energy radiation may be selected from EB, radiation, UV radiation, IR radiation, and microwave, with UV radiation being preferred. Irradiation of activation energy radiation may be performed in a nitrogen atmosphere to avoid cure obstruction or in air to control the cure progress. The atmosphere preferably has an oxygen concentration of 100 ppm to 50% by volume, more preferably 0.1 to 21% by volume. The intensity of activation energy radiation may be set in an appropriate range so that irradiation may be performed in air atmosphere. The coated substrate may be preheated prior to the activation energy radiation cure step. Preheating may help the solvent volatilize off the coating, contributing to the formation of an adherent tough film after cure. Although the cure temperature and the dose of activation energy radiation are not particularly limited, activation energy radiation is preferably irradiated at a temperature below the heat resistant temperature of the substrate. The preferred process includes preheating at 40 to 150°C, more preferably 60 to 120°C, and even more preferably 70 to 90°C to volatilize off the solvent, and irradiating activation energy radiation in a dose of 100 to 3,000 $mJ/cm^2$, more preferably 300 to 2,000 $mJ/cm^2$, and even more preferably 400 to 1,500 $mJ/cm^2$. The solvent volatilizing step preferably continues for 3 to 10 minutes. A volatilizing step of shorter than 3 minutes may be insufficient for bond strength whereas a volatilizing step of longer than 10 minutes may cause the coating surface to be orange-peeled. Although the temperature and the dose of activation energy radiation may be independently set, a combination of appropriate conditions as mentioned above is preferred. Most preferably irradiation is performed at 80°C and in a dose of 600 $mJ/cm^2$. Temperatures below 40°C are unfavorable in most cases because the solvent volatilizes

insufficiently, leaving voids and disorders in the coating. Temperatures above 150°C are unfavorable in most cases because the initiator can be thermally decomposed to incur unexpected reactions. A dose of less than 100 mJ/cm$^2$ is unfavorable in most cases because of undercure. A dose of more than 3,000 mJ/cm$^2$ is unfavorable in most cases because of cracking and uneven cure.

The thickness of the cured film is not particularly limited and may be selected as appropriate for a particular application. The cured film preferably has a thickness of 0.1 to 50 μm, and more preferably 1 to 20 μm for ensuring that the cured film has hardness, mar resistance, long-term stable adhesion and crack resistance. The thickness of the film may be adjusted as appropriate by tailoring the coating technique. Specifically, a certain parameter of coating technique, for example, the spin rate in spin coating, the pull rate in dip coating, bar No. in wire bar coating, or discharge gap in comma coater may be tailored. The film thickness may also be controlled by adjusting the viscosity of the silicone coating composition. In this case, the purpose may be attained by adding a thickener insofar as physical properties of the coating are not affected, by adjusting the amount of the solvent (E) or by adjusting the Mw of component (C).

The silicone coating composition of the invention is characterized by visible light transmittance (i.e. transparency) in coating form. An index of visible light transmittance is the haze of a film. In general, the haze increases as the film becomes thicker. The film having a thickness of up to 5 μm preferably meets a haze of up to 2.0%, more preferably up to 1.5%, and even more preferably up to 1.0%. The haze can be as measured by a haze meter NDH2000 (Nippon Denshoku Industries Co., Ltd.).

The silicone coating composition is also characterized in that a coating of the coating composition has good or improved mar resistance. An index of mar resistance is a delta haze value (ΔHz) in the Taber abrasion test. Specifically, a ΔHz value is determined according to ASTM D1044 by mounting a Taber abrasion tester with abrasion wheels CS-10F, measuring the haze after 500 rounds under a load of 500 g, and calculating a difference (ΔHz) between haze values before and after the test. The film with a thickness of up to 5 μm preferably has ΔHz of up to 15.0 points, more preferably up to 13.0 points, and even more preferably up to 10.0 points.

While the cured coating of the silicone coating composition has improved mar resistance as mentioned just above, an inorganic evaporated film may be deposited on the cured coating in order to gain a further improvement in mar resistance. The inorganic evaporated film is not particularly limited as long as it is formed by a dry film deposition method. Included are films based on at least one metal or oxide, nitride or sulfide thereof, the metal being selected from the group consisting of Si, Ti, Zn, Al, Ga, In, Ce, Bi, Sb, B, Zr, Sn and Ta. Also included are diamond-like carbon films having a high hardness and insulating properties. The method for depositing an inorganic evaporated film is not particularly limited as long as it is a dry film deposition method. Suitable dry film deposition methods include physical gas phase growth methods such as resistance heating evaporation, electron beam evaporation, molecular beam epitaxy, ion beam deposition, ion plating, and sputtering, and chemical vapor deposition (CVD) methods such as thermal CVD, plasma CVD, photo CVD, epitaxial CVD, atomic layer CVD, and cat-CVD. Preferably the inorganic evaporated film has a thickness of 0.1 to 10 μm.

The silicone coating composition is further characterized by weather resistance in coating form. An index of weather resistance is given by a weathering test to see whether or not a coating is kept intact in outer appearance, specifically whether or not a coating is cracked. To examine the development of cracks in a coating, the weathering test is carried out by using EYE Super UV tester W-151 (Iwasaki Electric Co., Ltd.), and irradiating UV light having an intensity of $1\times10^3$ W/m$^2$ at a temperature of 60°C and a relative humidity (RH) of 50%, and determining an irradiation time until cracks develop in the coating. For example, when UV radiation having an intensity of $1\times10^3$ W/m$^2$ is irradiated for 1 hour, the accumulative energy quantity is 1 kWh/m$^2$, which is equal to 3.6 megajoule per square meters (MJ/m$^2$) according to the conversion rule of derived units. The cured film or coated article within the scope of the invention undergoes neither cracking nor whitening nor yellowing and maintains aesthetic appearance even after exposure in an accumulative UV energy quantity of 300 MJ/m$^2$.

In the weathering test, any environment of test conditions may be selected. An accumulative UV energy quantity of 300 MJ/m$^2$ corresponds to outdoor exposure over about 2 years. The correlation of test conditions to outdoor exposure may be readily estimated. For example, an outdoor UV illuminance is $1\times10^1$ W/m$^2$, when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) $\times$ 365 (day/year) $\times$ 2 (year) $\times$ 10 (W/m$^2$) = 88 (kWh/m$^2$) $\cong$ 300 (MJ/m$^2$). When the facts that the outdoor environment depends on the latitude and weather, and the weathering test uses an artificial environment are taken into account, it is reasonable that an approximation of 300 MJ/m$^2$ corresponds to outdoor exposure over 2 years. The test conditions may be changed depending on a particular environment where the cured film is used.

In the weathering test, the coated article may be examined for a degree of degradation by taking out the article in the course of UV exposure and observing the outer appearance. One factor of appearance change is cracks, which may be evaluated by visual or microscopic observation. The microscope which can be used to this end is, for example, laser scanning microscope Model VK-8710 by Keyence Corp., but not limited thereto.

Another factor of appearance change is whitening, which may be determined in terms of haze of a coated

article. The haze is as measured by a haze meter NDH2000 (Nippon Denshoku Industries Co., Ltd.), for example. Provided that Hz0 is an initial haze and Hz1 is a haze after the test, weathering haze is determined as ΔHz' = Hz1 - Hz0. Preferably, the weathering haze ΔHz' is less than 10 points, more preferably up to 8 points, and even more preferably up to 5 points. A sample with ΔHz' of 10 or greater points is undesirable because of an advance of whitening and worsening of transparency.

A further factor of appearance change is yellowing, which may be determined in terms of yellowness index of a coated article. The yellowness index is measured by a chromaticity meter Z-300A (Nippon Denshoku Industries Co., Ltd.), for example. Provided that YI0 is an initial yellowness index and YI1 is a yellowness index after the test, a difference is determined as ΔYI' = YI1 - YI0. The yellowness index difference (ΔYI') is preferably up to 10, more preferably up to 8, and even more preferably up to 5, before and after exposure to UV radiation in a dose of 300 $MJ/m^2$. A sample with ΔYI' in excess of 10 is undesirable because of an advance of yellowing, degradation of the substrate, and worsening of aesthetic appearance.

The fourth advantage of the silicone coating composition is good adhesion of a cured film to a substrate. An index of adhesion is evaluated by a cross-hatch adhesion test according to JIS K5400, specifically by scribing a coating with a razor along 6 longitudinal and 6 transverse lines at a spacing of 2 mm to define 25 square sections, tightly attaching adhesive tape (Cellotape® by Nichiban Co., Ltd.), and rapidly pulling back the adhesive tape at an angle of 90°. The number (N) of sections remaining intact (not peeled) is expressed as N/25. As the number (N) of remaining sections is closer to 25, the sample is better in adhesion. An index of water-proof adhesion is available when the film-bearing substrate is immersed in boiling water at 100°C for 2 hours prior to a cross-hatch adhesion test as above.

The fifth advantage of the silicone coating composition is that the coating on the coated article controls the generation of interference fringes. It is believed that interference fringes generate from a difference in refractive index between the organic substrate and the coating. The generation of interference fringes is unfavorable to the design or appearance because interference fringes form an unintended rainbow pattern on the coated article. The interference fringe is visually observable simply by projecting fluorescent lamp light to the coated article so that the light is reflected thereby. When observed under monochromatic light projected from a sodium lamp, interference fringes appear more clearly.

The sixth advantage of the silicone coating composition is oxidation resistance in coating form. On outdoor use of the coated article, it is inevitable that the coating is oxidized under the influence of oxygen and water. It is described in Proceedings of the National Institute of Environmental Studies, Japan, Vol. 11, No. 4, 9, 1992, for example, that oxidative chemical species such as oxy, hydroxy and peroxo radicals generate in the ambient air environment. By performing a test capable of reproducing such an environment in a short time, the coating may be examined for oxidation resistance. For example, an accelerated oxidation resistance test may be carried out by immersing the coated article in a 30 wt% hydrogen peroxide aqueous solution and monitoring how the coating is affected. In this test, the coating is regarded favorable when the coating maintains its outer appearance intact, and when the adhesion or bond strength between the substrate and the coating is not weakened.

While the silicone coating composition can be applied to the surface of a substrate directly, the composition may be applied via another layer or layers, if desired. Suitable intervening layers include a primer layer, UV-absorbing layer, printing layer, recording layer, heat-ray shielding layer, adhesive layer, inorganic vapor-deposited layer and the like.

## EXAMPLES

Synthesis Examples, Examples and Comparative Examples are given below by way of illustration and not by way of limitation. All parts are by weight. The weight average molecular weight (Mw) is measured by GPC versus polystyrene standards. $D_{50}$ is a volume basis 50% cumulative distribution diameter as measured by Nanotrac UPA-EX150 (Nikkiso Co., Ltd.) based on the dynamic light scattering method.

Reactants were purchased from chemical suppliers including Wako Pure Chemical Industries, Ltd. (abbreviated Wako) and Shin-Etsu Chemical Co., Ltd. (abbreviated Shin-Etsu).

### Synthesis Example 1

### Synthesis of component (A)

Preparation of a dispersion (i) of tin/manganese solid-solution titanium oxide nanoparticles (5 mol% tin and 1 mol% manganese relative to 100 mol% titanium)

To 66.0 g of 36 wt% titanium(IV) chloride aqueous solution (TC-36 by Ishihara Sangyo Kaisha, Ltd.) were added 2.2 g of tin(IV) chloride pentahydrate (Wako) and 0.25 g of manganese(II) chloride tetrahydrate (Wako). They were thoroughly mixed and diluted with 1,000 g of deionized water. To the metal salt aqueous solution mixture, 300 g of 5

wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating deionized water addition and decantation. To the precipitate of titanium hydroxide containing tin and manganese after deionization, 100 g of 30 wt% aqueous hydrogen peroxide (Wako) was gradually added, whereupon stirring was continued at 60°C for 3 hours for full reaction. Thereafter, pure water was added for concentration adjustment, yielding a brown transparent solution of tin and manganese-containing peroxotitanic acid (solids concentration 1 wt%).

An autoclave of 500 mL volume (TEM-D500 by Taiatsu Techno Co., Ltd.) was charged with 350 mL of the peroxotitanic acid solution synthesized above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a dispersion (i) of titanium oxide nanoparticles having tin and manganese incorporated in solid solution.

In the titanium oxide nanoparticle dispersion (i), the titanium oxide nanoparticles had a volume basis 50% cumulative distribution diameter ($D_{50}$) of 15 nm as measured by Nanotrac UPA-EX150. The titanium oxide nanoparticles were analyzed for crystal phase by a powder X-ray diffraction analyzer MultiFlex (Rigaku Co., Ltd.), finding that they were of rutile type.

Formation of silicon oxide shell

A separable flask equipped with a magnetic stirrer and thermometer was charged with 100 parts of the titanium oxide dispersion (i), 20 parts of ethanol, and 0.2 part of ammonia at room temperature, followed by magnetic stirring. The separable flask was placed in an ice bath and cooled until the temperature of the contents reached 5°C. Tetraethoxysilane, 1.8 parts, was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. After the heating, the reactor was cooled to room temperature in a water bath. The liquid was poured into a round bottom flask and concentrated by batchwise vacuum distillation. After concentration, the liquid was kept in contact with 10 parts of Amberlite 200CT and 10 parts of Amberlite IRA900 (Organo Co., Ltd.) for 30 minutes. The mixture was filtered by filter paper (Advantec 2B) to remove the ion exchange resins. The filtrate was component (A). A given amount of component (A) was weighed by a precision balance (AUX-220 by Shimadzu Corp.) and treated in an oven (Perfect Oven by Espec Corp.) at 105°C for 3 hours for volatilizing off the dispersing solvent. It was then confirmed that the dispersion had a solids concentration of 10 wt%. After component (A) was diluted to a solids concentration of 1 wt%, the volume basis 50% cumulative distribution diameter ($D_{50}$) was measured by Nanotrac UPA-EX150, finding a size $D_{50}$ of 20 nm.

Comparative Synthesis Example 1

Synthesis of component (A')

(5 mol% tin relative to 100 mol% titanium)

Component (A') was prepared as in Synthesis Example 1 except that manganese(II) chloride tetrahydrate was omitted.

Comparative Synthesis Example 2

Synthesis of component (A")

(1 mol% manganese relative to 100 mol% titanium)

Component (A") was prepared as in Synthesis Example 1 except that tin(IV) chloride pentahydrate was omitted.

Measurement of Mw and OH number of component (B)

Component (B) used in Examples and Comparative Examples was a polycarbonate based urethane-modified vinyl polymer (trade name Akurit 8UA-347 by Taisei Fine Chemical Co., Ltd., solids 30 wt%, methyl ethyl ketone/isopropyl alcohol solution). The Mw and hydroxyl number of this polymer were analyzed.

Measurement of Mw

Molecular weight was measured by using a gel permeation chromatograph (model HLC-8320 by Tosoh Corp.), feeding tetrahydrofuran (trade name Cica guaranteed grade by Kanto Chemical Co., Ltd.) as eluent, measuring the time taken until the polymer was eluted from the fixed phase of a polystyrene filled column (trade name TSKgelG3000HXL by Tosoh Corp.), and comparing it with polystyrene standard samples (trade name PStQuick E and F by Tosoh Corp.). The polymer had a Mw of 20,210.

Measurement of OH number

**[0135]** One prong of a forked test tube was charged with component (B) from which the solvent had been volatilized off, and the other prong was charged with a dibutyl ether solution of magnesium methyl iodide (Kishida Chemical Co., Ltd.). The volume of methane generated after mixing of the two components was measured by a gas burette, from which a hydroxyl number was computed. The polymer had a hydroxyl number of 30 wt% based on the solids content.

Example 1

A four neck 1-L separable flask equipped with a Dimroth condenser, nitrogen inlet tube, thermometer and impeller was charged with 167 g of methyltrimethoxysilane (KBM-13 by Shin-Etsu). With stirring, 200 g (solids 20 g) of component (A) prepared in Synthesis Example 1 was added to the flask. Hydrolysis of alkoxysilane took place instantaneously, and it was confirmed that the internal temperature rose to 50°C. After stirring in this state for 10 minutes, a mixture of 30 g (solids 6 g) of colloidal silica (Snowtex-O by Nissan Chemical Industries, Ltd.) and 1 g of acetic acid (Wako) was added to the flask. The reaction mixture was ripened at 60°C for 3 hours, after which 210 g of cyclohexanone (Godo Co., Ltd.) was added. The temperature of contents was elevated to 90°C, at which the volatile matter (170 g) was distilled off. After distillation, the flask content was a suspension. With stirring, 200 g of isopropyl alcohol (Delta Chemicals), 0.4 g of a leveling agent (KP-341 by Shin-Etsu), 1 g of acetic acid (Wako), 3 g of tetra-n-butylammonium hydroxide (10 wt% aqueous solution, Wako), 10 g of component (C-1) (siloxane resin which is solid at or below 40°C and has a Mw of 2,600 as measured by GPC, KR-220L by Shin-Etsu), 23 g (solids 6.9 g) of component (B): polycarbonate based urethane-modified vinyl polymer (Akurit 8UA-347 by Taisei Fine Chemical Co., Ltd.) ([solids content of component (B)]/[total solids content of components (A), (C) and (F)] = 6.4 wt%), 200 g of trimethylolpropane triacrylate (A-TMPT by Shin-Nakamura Chemical Co., Ltd.), and 20 g of a photopolymerization initiator (2-hydroxy-2-methyl-1-phenylpropan-1-one) were admitted in sequence to the suspension. The contents were stirred until uniform and filtered through a paper filter (Advantec 2B), yielding a silicone coating composition.

A given amount of the silicone coating composition was weighed by a precision balance (AUX-220 by Shimadzu Corp.) and treated in an oven (Perfect Oven by Espec Corp.) at 105°C for 3 hours for volatilizing off the dispersing solvent. The composition had a solids concentration of 38 wt%. Also, component (C) had a Mw of 2,000.

Example 2

A silicone coating composition was prepared as in Example 1 aside from using 15 g of ion exchanged water instead of 15 g of colloidal silica. The composition had a solids concentration of 36 wt%.

Example 3

A four neck 2-L separable flask equipped with a Dimroth condenser, nitrogen inlet tube, thermometer and impeller was charged with 70 g of 3-acryloyloxypropyltrimethoxysilane (KBM-5103 by Shin-Etsu), 20 g of 3-acryloyloxypropylmethyl-dimethoxysilane (KBM-5102 by Shin-Etsu), and 110 g of tetraethoxysilane (KBE-04 by Shin-Etsu), which were stirred at 10°C. At the time when the internal temperature reached 10°C, with stirring, 60 g (solids 6 g) of component (A) prepared in Synthesis Example 1 was added dropwise from the dropping funnel to the flask while mixing for hydrolysis. At the end of dropwise addition, stirring was continued at 10°C for 1 hour and then at 25°C for 1 hour for ripening. Cyclopentanol, 100 g, was added to the reaction mixture, which was heated until 160 g of volatile matter was distilled off. Heating was followed by cooling to 25°C. With stirring, 60 g of diacetone alcohol, 60 g of cyclopentanol, 0.2 g of a leveling agent (KP-341 by Shin-Etsu), 0.7 g of tris(acetylacetonato)aluminum(III), 16 g (solids 4.8 g) of component (B): polycarbonate based urethane-modified vinyl polymer (Akurit 8UA-347 by Taisei Fine Chemical Co., Ltd.) ([solids content of component (B)]/[total solids content of components (A), (C) and (F)] = 3.8 wt%), 27.7 g of a photopolymerization initiator (2-hydroxy-2-methyl-1-phenylpropan-1-one), 213 g of cyclopentanol, and 166 g of trimethylolpropane triacrylate (A-TMPT by Shin-Nakamura Chemical Co., Ltd.) were admitted in sequence. The contents were stirred until uniform and filtered through a paper filter (Advantec 2B), yielding a silicone coating composition. The composition had a solids

concentration of 40 wt%. Also, component (C) had a Mw of 1,670.

Comparative Example 1

A 1-L separable flask was charged with 155.3 g of γ-mercaptopropyltrimethoxysilane (KBM-803 by Shin-Etsu). With stirring, 98.4 g of 0.25N acetic acid aqueous solution was added dropwise to the flask which was cooled such that the internal temperature might not exceed 40°C, thereby conducting a first stage of hydrolysis. At the end of dropwise addition, stirring was continued below 40°C for 1 hour and then at 60°C for 2 hours. Next, 32.8 g of 0.25N acetic acid aqueous solution and 35.9 g of methyltrimethoxysilane (KBM-13 by Shin-Etsu) were admitted in sequence, and stirring was continued at 60°C for 3 hours to conduct a second stage of hydrolysis. Thereafter, 150 g of cyclohexanone (Godo Co., Ltd.) was added to the reaction solution, which was heated under atmospheric pressure until the liquid temperature reached 92°C, for thereby distilling off the methanol resulting from hydrolysis and effecting condensation. Then, 209 g of isobutyl alcohol (Wako), 0.7 g of a leveling agent (KP-341 by Shin-Etsu), 0.8 g of acetic acid (Wako), and 1.0 g of tetramethylammonium hydroxide aqueous solution (ELM-D(20) by Mitsubishi Gas Chemical Co., Inc.) were added. Further, 20 g of component (B): polycarbonate based urethane-modified vinyl polymer (Akurit 8UA-347 by Taisei Fine Chemical Co., Ltd.), 200 g of trimethylolpropane triacrylate (A-TMPT by Shin-Nakamura Chemical Co., Ltd.), and 20 g of a photopolymerization initiator (2-hydroxy-2-methyl-1-phenylpropan-1-one) were added and mixed, yielding a silicone coating composition. The composition had a solids concentration of 35 wt%.

Comparative Example 2

A silicone coating composition was prepared as in Example 1 aside from omitting component (A). Specifically, a four neck 1-L separable flask equipped with a Dimroth condenser, nitrogen inlet tube, thermometer and impeller was charged with 190 g of methyltrimethoxysilane (KBM-13 by Shin-Etsu). A mixture of 158 g of colloidal silica (Snowtex-O by Nissan Chemical Industries, Ltd.) and 60 g of 0.25N acetic acid aqueous solution was added to the flask. The reaction mixture was ripened at 60°C for 3 hours, after which 210 g of cyclohexanone (Godo Co., Ltd.) was added. The temperature of contents was elevated to 90°C, at which the volatile matter (170 g) was distilled off. After distillation, the flask content was a suspension. With stirring, 280 g of isopropyl alcohol (Delta Chemicals), 0.4 g of a leveling agent (KP-341 by Shin-Etsu), 1 g of acetic acid (Wako), 3 g of tetra-n-butylammonium hydroxide (10 wt% aqueous solution, Wako), 23 g of component (B): polycarbonate based urethane-modified vinyl polymer (Akurit 8UA-347 by Taisei Fine Chemical Co., Ltd.), 200 g of trimethylolpropane triacrylate (A-TMPT by Shin-Nakamura Chemical Co., Ltd.), and 20 g of a photopolymerization initiator (2-hydroxy-2-methyl-1-phenylpropan-1-one) were admitted in sequence to the suspension. The contents were stirred until uniform and filtered through a paper filter (Advantec 2B), yielding a silicone coating composition. The composition had a solids concentration of 36 wt%.

Comparative Example 3

A silicone coating composition was prepared as in Example 1 aside from using component (A') prepared in Comparative Synthesis Example 1 instead of component (A). The resulting composition had a solids concentration of 38 wt%.

Comparative Example 4

A silicone coating composition was prepared as in Example 1 aside from using component (A") prepared in Comparative Synthesis Example 2 instead of component (A). The resulting composition had a solids concentration of 38 wt%.

Comparative Example 5

A similar silicone coating composition was prepared using a commercially available titanium oxide dispersion instead of component (A) in Example 1. Specifically, a four neck 1-L separable flask equipped with a nitrogen inlet tube, thermometer and impeller was charged with 400 g of the silicone coating composition prepared in Comparative Example 2. With stirring, 50 g of a 15 wt% alcohol dispersion of tin/cobalt-doped titanium oxide (RTTDNB15%-E88 by CIK NanoTek Corp.) was added. Stirring was continued at 25°C for 15 minutes, yielding a silicone coating composition. The composition had a solids concentration of 38 wt%.

Comparative Example 6

A silicone coating composition was prepared as in Example 1 aside from omitting trimethylolpropane triacrylate as component (G). The resulting composition had a solids concentration of 20 wt%.

Comparative Example 7

A silicone coating composition was prepared as in Example 3 aside from omitting component (B). The resulting composition had a solids concentration of 42 wt%.

Evaluation Test 1

Preparation of coated article

In a thermostatic chamber kept at temperature 25°C and humidity RH 30%, the silicone coating composition was flow coated onto a polycarbonate substrate of 4 mm thick (trade name Lexan GLX143 by SABIC). After coating, the substrate was held in the chamber for 15 minutes for leveling of the coating. The coated substrate was treated in an oven at 80°C for 5 minutes and exposed to UV radiation in a dose of 600 $mJ/cm^2$ in a UV curing system (model ECS-401XN2 by Eye Graphics Co., Ltd.) for curing the coating. A coated article was obtained in this way. It is noted that when the silicone coating composition of Comparative Example 6 was used, a coated article was not obtained because the coating could not be cured.

(1) Film thickness

The thickness of a cured film on the coated article was measured by a fast Fourier transform thin-film interferometer (F-20 by Filmetrics, Inc.). In all cases, the coating layer had a thickness of $1\times10^{-5}$ m.

The coated articles were evaluated for coating transparency, mar resistance, interference fringe, initial adhesion, water resistant appearance, water resistant adhesion, and oxidation resistance. The results are shown in Table 1. It is noted that a coating of the silicone coating composition of Comparative Example 7 showed poor initial adhesion and was no longer evaluated for the remaining items. The symbol "-" in Table 1 indicates that the relevant item was not evaluated.

(2) Coating transparency

A coating was measured for haze (Hz) by a haze meter NDH2000 (Nippon Denshoku Industries Co., Ltd.). The sample is rated pass (○) when Hz is less than 1% and rejected (×) when Hz is 1% or greater.

(3) Mar resistance

Mar resistance was analyzed according to ASTM D1044 by mounting a Taber abrasion tester with wheels CS-10F, measuring a haze after 500 turns under a load of 500 g by means of the haze meter NDH2000, and calculating a haze difference (ΔHz) before and after the test. The sample is rated pass (○) when ΔHz is less than 10 points and rejected (x) when ΔHz is 10 points or greater.

(4) Interference fringes

The coated article was visually observed under light from a sodium lamp (FNA-35 by Funatech Co., Ltd.). The sample is rated pass (○) for no noticeable interference fringe and rejected (×) for noticeable interference fringe.

(5) Initial adhesion

The coated article was examined for adhesion by a cross-hatch adhesion test according to JIS K5400, specifically by scribing the sample with a razor along 6 longitudinal and 6 transverse lines at a spacing of 2 mm to define 25 square sections, tightly attaching adhesive tape (Cellotape® by Nichiban Co., Ltd.) thereto, rapidly pulling back the adhesive tape at an angle of 90°, and counting the number (N) of coating sections kept unpeeled. The result is expressed as N/25. The sample is rated pass (○) when N is 25 and rejected (×) when N is less than 25.

(6) Appearance and adhesion after water immersion

The coated article was immersed in boiling water for 2 hours, after which it was visually observed for appearance and examined for adhesion by the adhesion test (5). With respect to water resistant appearance, the sample is rated pass (○) when the outer appearance remains intact and rejected (×) when the coating is whitened and/or peeled. With respect to water resistant adhesion, the sample is rated pass (○) when N is 25 and rejected (×) when N is less than 25.

(7) Oxidation resistance

The coated article was immersed in 30 wt% hydrogen peroxide water for 0.5 hour, after which it was visually observed for appearance. The sample is rated pass (○) when the outer appearance remains intact and rejected (×) when the coating is whitened and/or peeled.

Evaluation Test 2

Condition setting

Prior to setting of conditions for a weathering test, an outdoor UV dose was measured using a UV illuminometer (EYE UV illuminometer UVP365-1 by Iwasaki Electric Co., Ltd.). When measured at noon on fine Vernal Equinox Day (20th March, 2012) at Matsuida, Annaka City, Gunma Pref., Japan, the UV dose was $1\times10^1$ W/$m^2$. This UV dose is typical in consideration of the prior art report (International Commission on Illumination, 20, 47 (1972), CIE Publication). In the practice of the invention, the weather resistance of a cured film is set so as to correspond to outdoor exposure over 2 years. Assume that the annual average daily sunshine time is 12 hours, the accumulative energy quantity is estimated to be 12 (h/day) × 365 (day/year) × 2 (year) × 10 (W/$m^2$) = 88 (kWh/$m^2$) ≅ 300 (MJ/$m^2$).

Weathering test

The coated article was evaluated for weather resistance, using EYE Super UV tester W-151 (Iwasaki Electric Co., Ltd.). The test conditions included UV radiation and an accumulative UV energy quantity of 300 MJ/$m^2$. Thereafter, the sample was evaluated for appearance change, weathering adhesion, weathering haze, and yellowing.

(8) Appearance change on weathering

After UV exposure of 300 MJ/$m^2$, the outer appearance of the coated article was visually observed to determine a degree of degradation. Appearance changes include cracks and foreign particles, which are observable under a laser scanning microscope (model VK-8710 by Keyence Corp.). The sample is rated pass (○) when neither cracks nor foreign particles are observed and rejected (×) when cracks and foreign particles are observed.

(9) Weathering adhesion

After UV exposure of 300 MJ/$m^2$, the coated article was subjected to an adhesion test by tightly attaching adhesive tape (Cellotape® by Nichiban Co., Ltd.) thereto, and rapidly pulling back the adhesive tape at an angle of 90°. The sample is rated pass (○) when the coating is not peeled and rejected (×) when the coating is peeled.

(10) Weathering haze

After UV exposure of 300 MJ/$m^2$, the coated article was measured for haze by the haze meter NDH2000. A haze difference (ΔHz') before and after the weathering test was calculated. The sample is rated excellent (◎) when ΔHz' is less than 5 points, good (○) when ΔHz' is 5 points to less than 10 points, and rejected (×) when ΔHz' is 10 points or greater.

(11) Yellowing

After UV exposure of 300 MJ/$m^2$, the coated article was measured for yellowness index by chromaticity meter Z-300A (Nippon Denshoku Industries Co., Ltd.). A change of yellowness index was computed as $\Delta YI' = YI^1 - YI^0$ wherein $YI^1$ is a yellowness index after the weathering test and $YI^0$ is a yellowness index before the weathering test. The sample is rated excellent (◎◎) when ΔYI' is less than 5, good (○) when ΔYI' is 5 to less than 10, and rejected (×) when ΔYI' is 10 or greater.

Table 1

| Test items | Example | | | Comparative Examples | | | | | |
|---|---|---|---|---|---|---|---|---|---|
| | 1 | 2 | 3 | 1 | 2 | 3 | 4 | 5 | 7 |
| Coating transparency | ○ | ○ | ○ | ○ | ○ | ○ | ○ | ○ | - |
| Mar resistance | ○ | ○ | ○ | ○ | ○ | ○ | ○ | ○ | - |
| Interference fringe | ○ | ○ | ○ | ○ | × | ○ | ○ | ○ | ○ |
| Initial adhesion | ○ | ○ | ○ | ○ | ○ | ○ | ○ | ○ | × |
| Water resistant appearance | ○ | ○ | ○ | ○ | ○ | ○ | ○ | ○ | - |
| Water resistant adhesion | ○ | ○ | ○ | ○ | ○ | ○ | ○ | × | - |
| Oxidation resistance | ○ | ○ | ○ | × | ○ | ○ | ○ | ○ | - |
| Weathering appearance | ○ | ○ | ○ | × | × | × | × | × | - |
| Weathering adhesion | ○ | ○ | ○ | × | × | × | × | × | - |
| Weathering haze | ◎ | ◎ | ○ | × | × | × | × | × | - |
| Yellowing | ◎ | ◎ | ○ | × | × | × | × | × | - |

As is evident from Table 1, the silicone coating composition of Comparative Example 1 has good initial physical properties, but lacks weathering resistance. In contrast, the silicone coating compositions of Examples 1, 2 and 3 has good initial physical properties as well as weathering performance. As attested by Comparative Examples 3, 4 and 5, it is not true that such weathering performance is achievable independent of the type of nanoparticulate metal oxide. Comparative Examples 3 and 4, wherein different elements are incorporated in solid solution in nanoparticulate metal oxide, reveal that the solid-solution element has substantial impact on the weathering performance of a coating. The impact of a solid-solution element on a coating and the identity of solid-solution element capable of imparting industrial utility are unknown prior to the present invention. In Comparative Example 5 using commercially available titania sol, weathering performance and water resistant adhesion are poor. This is because the dispersant present in the commercially available titania sol has detrimental impact on the adhesion of a coating. The identity of dispersant effective for nanoparticulate metal oxide and suited for the purpose contemplated herein is unknown prior to the present invention. In the coatings of Examples 1, 2 and 3, the interference fringe is minimized, while other physical properties are not worsened at all. Coatings of the compositions of the invention show satisfactory physical properties. Since the compositions of the invention are readily cured with UV radiation, the invention is also advantageous in manufacture process. As seen from these facts, Examples and Comparative Examples demonstrate the utility of the invention although the invention is not limited to Examples.

## Claims

**1.** An activation energy radiation-curable silicone coating composition comprising

(A) a water dispersion of core/shell type tetragonal titanium oxide solid-solution particles, wherein said core/shell type particles each consist of a core of tetragonal titanium oxide having tin and manganese incorporated in solid solution and a shell of silicon oxide around the core, said cores have a volume basis 50% cumulative distribution diameter ($D_{50}$) of up to 30 nm, and said core/shell type particles have a volume basis 50% cumulative distribution diameter ($D_{50}$) of up to 50 nm, both as measured by the dynamic light scattering method using laser light, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1,
(B) a polycarbonate and/or polyester-based urethane-modified vinyl polymer,
(C) a hydrolytic condensate obtainable from (co)hydrolytic condensation of at least one sulfur-free alkoxysilane having the general formula (1):

$$R^1_mR^{2n}_nSi(OR^3)_{4-m-n} \qquad (1)$$

wherein $R^1$ and $R^2$ are each independently hydrogen or a substituted or unsubstituted, monovalent $C_1$-$C_{12}$ hydrocarbon group, $R^1$ and $R^2$ may bond together, $R^3$ is $C_1$-$C_3$ alkyl, m and n are independently 0 or 1, m+n is 0, 1 or 2, or partial hydrolytic condensate thereof,
(D) a photo-polymerization initiator,
(E) a solvent,
(F) optional colloidal silica, and
(G) a polymerizable vinyl compound other than components (B) and (C),

the solids content of the urethane-modified vinyl polymer (B) being 1 to 30 parts by weight per 100 parts by weight of the total solids content of components (A), (C) and (F).

**2.** The silicone coating composition of claim 1 wherein the solids content of component (A) is 5 to 25% by weight based on the total solids content of the composition.

**3.** The silicone coating composition of claim 1 or 2 wherein component (A) contains a basic dispersant selected from ammonia, alkali metal salts, and compounds having the general formula (2):

$$R^4R^5R^6R^7NOH \qquad (2)$$

wherein $R^4$, $R^5$, $R^6$, and $R^7$ are each independently hydrogen, $C_1$-$C_{10}$ alkyl, aryl or aralkyl group.

**4.** The silicone coating composition of any one of claims 1 to 3 wherein component (B) is a polycarbonate-based urethane-modified vinyl polymer.

**5.** The silicone coating composition of any one of claims 1 to 4 wherein component (B) has a weight average molecular weight of 5,000 to 50,000 as measured versus polystyrene standards by gel permeation chromatography as described in the description.

**6.** The silicone coating composition of any one of claims 1 to 5 wherein component (B) has a hydroxyl number of at least 10% by weight on solids content basis measured by the method described in the experimental part of the description.

**7.** The silicone coating composition of any one of claims 1 to 6 wherein the hydrolytic condensate as component (C) is obtained, when component (C) is mixed with component (A), from reaction with water in component (A).

**8.** The silicone coating composition of any one of claims 1 to 7 wherein the amount of component (C) blended is 10 to 90% by weight based on the total solids content of the composition.

**9.** The silicone coating composition of any one of claims 1 to 8 wherein component (C) contains 1 to 50% by weight of (C-1) a siloxane resin having the average compositional formula (3):

$$R^8_aSi(OR^9)_bOH)_cO_{(4-a-b-c)/2} \qquad (3)$$

wherein $R^8$ is each independently a $C_1$-$C_{18}$ organic group, $R^9$ is each independently a $C_1$-$C_4$ organic group, a, b and c are numbers in the range: $0.8 \le a \le 1.5$, $0 \le b \le 0.3$, $0.8 \le c \le 0.5$, and $0.801 \le a+b+c < 2$, the siloxane resin being solid at or below 40°C and having a weight average molecular weight of at least 2,000 as measured versus polystyrene standards by gel permeation chromatography.

**10.** The silicone coating composition of any one of claims 1 to 9 wherein component (E) is at least one solvent selected from water, alcohols, and ketones, and is used in such an amount as to adjust the silicone coating composition to a solids concentration of 10 to 50% by weight.

**11.** The silicone coating composition of any one of claims 1 to 10 wherein the solids content of the colloidal silica as component (F) is 5 to 100 parts by weight per 100 parts by weight of the total solids content of components (A) and (C).

**12.** The silicone coating composition of any one of claims 1 to 11 wherein the amount of the polymerizable vinyl compound added as component (G) is 1 to 200 parts by weight per 100 parts by weight of the total solids content of components

(A), (C) and (F).

**13.** Use of a composition according to any one of claims 1 to 12 for coating an organic resin substrate, preferably directly without a primer.

**14.** A coated article comprising an organic resin substrate and a cured film of the silicone coating composition of any one of claims 1 to 12 coated directly on at least one surface of the substrate.

**15.** The coated article of claim 14 wherein the organic resin substrate is polycarbonate.

**16.** The coated article of claim 14 or 15, exhibiting a yellowness index difference ΔYI' as measured by a chromaticity meter of less than 10 before and after exposure to UV radiation in a dose of 300 $MJ/m^2$, and/or a haze difference ΔHz as measured by a haze meter of less than 10 before and after exposure to UV radiation in a dose of 300 $MJ/m^2$.

**Patentansprüche**

**1.** Durch Aktivierungsenergiestrahlung härtbare Siliconbeschichtungszusammensetzung, umfassend:

(A) eine Wasserdispersion von tetragonalen Titanoxid-Festlösungsteilchen vom Kern/Hülle-Typ, wobei die Teilchen vom Kern/Hülle-Typ jeweils aus einem Kern aus tetragonalem Titanoxid mit in fester Lösung inkorporiertem Zinn und Mangan und einer Hülle aus Siliciumoxid rund um den Kern bestehen, wobei die Kerne einen kumulativen 50-%-Verteilungsdurchmesser ($D_{50}$) auf Volumenbasis von bis zu 30 nm und die Teilchen vom Kern/Hülle-Typ einen kumulativen 50-%-Verteilungsdurchmesser ($D_{50}$) auf Volumenbasis von bis zu 50 nm, beide gemessen mittels dynamischer Lichtstreuung unter Verwendung von Laserlicht, aufweisen, wobei die Menge an in fester Lösung inkorporiertem Zinn ein molares Verhältnis von Titan zu Zinn (Ti/Sn) von 10/1 bis 1.000/1 bereitstellen soll und die Menge an in fester Lösung inkorporiertem Mangan ein molares Verhältnis von Titan zu Mangan (Ti/Mn) von 10/1 bis 1.000/1 bereitstellen soll,
(B) ein Polycarbonat- und/oder Polyester-basiertes Urethan-modifiziertes Vinylpolymer,
(C) ein hydrolytisches Kondensat, das aus (co)hydrolytischer Kondensation von zumindest einem schwefelfreien Alkoxysilan mit der allgemeinen Formel (1) erhältlich ist:

$$R^1_mR^2_nSi(OR^3)_{4-m-n} \qquad (1),$$

wobei $R^1$ und $R^2$ jeweils unabhängig für Wasserstoff oder eine substituierte oder nicht substituierte einwertige $C_1$-$C_{12}$-Kohlenwasserstoffgruppe stehen, $R^1$ und $R^2$ aneinander binden können, $R^3$ für ein $C_1$-$C_3$-Alkyl steht, m und n unabhängig für 0 oder 1 stehen, m+n = 0, 1 oder 2 ist; oder ein teilweise hydrolytisches Kondensat davon,
(D) einen Photopolymerisationsinitiator,
(E) ein Lösungsmittel,
(F) gegebenenfalls kolloidale Kieselsäure und
(G) eine andere polymerisierbare Vinylverbindung als die Bestandteile (B) und (C),

wobei der Feststoffgehalt des Urethan-modifizierten Vinylpolymers (B) 1 bis 30 Gewichtsteile pro 100 Gewichtsteile des gesamten Feststoffgehalts der Bestandteile (A), (C) und (F) ist.

**2.** Siliconbeschichtungszusammensetzung nach Anspruch 1, wobei der Feststoffgehalt von Bestandteil (A) 5 bis 25 Gew.-% bezogen auf den gesamten Feststoffgehalt der Zusammensetzung beträgt.

**3.** Siliconbeschichtungszusammensetzung nach Anspruch 1 oder 2, wobei Bestandteil (A) einen basischen Dispergator ausgewählt aus Ammonium, Alkalimetallsalzen und Verbindungen mit der allgemeinen Formel (2) enthält:

$$R^4R^5R^6R^7NOH \qquad (2),$$

wobei $R^4$, $R^5$, $R^6$ und $R^7$ unabhängig voneinander jeweils eine Wasserstoff-, $C_1$-$C_{10}$-Alkyl-, Aryl- oder Aralkylgruppe darstellen.

**4.** Siliconbeschichtungszusammensetzung nach einem der Ansprüche 1 bis 3, wobei Bestandteil (B) ein Polycarbonat-basiertes Urethan-modifiziertes Vinylpolymer ist.

**5.** Siliconbeschichtungszusammensetzung nach einem der Ansprüche 1 bis 4, wobei Bestandteil (B) ein gewichtsmittleres Molekulargewicht von 5.000 bis 50.000, mittels Gelpermeationschromatographie in Bezug auf Polystyrol-Standard gemessen, wie in der Beschreibung beschrieben, aufweist.

**6.** Siliconbeschichtungszusammensetzung nach einem der Ansprüche 1 bis 4, wobei Bestandteil (B) eine Hydroxylzahl von zumindest 10 Gew.-% auf Feststoffgehaltbasis, gemessen durch das im experimentellen Teil der Beschreibung beschriebene Verfahren, aufweist.

**7.** Siliconbeschichtungszusammensetzung nach einem der Ansprüche 1 bis 6, wobei das hydrolytische Kondensat als Bestandteil (C), wenn Bestandteil (C) mit Bestandteil (A) gemischt wird, aus der Reaktion mit Wasser im Bestandteil (A) erhalten wird.

**8.** Siliconbeschichtungszusammensetzung nach einem der Ansprüche 1 bis 7, wobei die Menge an eingemischtem Bestandteil (C) 10 bis 90 Gew.-% bezogen auf den gesamten Feststoffgehalt der Zusammensetzung beträgt.

**9.** Siliconbeschichtungszusammensetzung nach einem der Ansprüche 1 bis 8, wobei Bestandteil (C) 1 bis 50 Gew.-% von (C-1) einem Siloxanharz mit der mittleren Zusammensetzungsformel (3) enthält:

$$R^8_aSi(OR^9)_b(OH)_cO_{(4-a-b-c)/2} \qquad (3),$$

wobei $R^8$ jeweils unabhängig für eine organische $C_1$-$C_{18}$-Gruppe steht, $R^9$ jeweils unabhängig für eine organische $C_1$-$C_4$-Gruppe steht und a, b und c für Zahlen im Bereich $0.8 \leq a \leq 1{,}5$, $0.8 \leq b \leq 0{,}3$, $0.8 \leq c \leq 0{,}5$ und $0.8 \leq a+b+c < 2$ stehen, wobei das Siloxanharz bei oder unter 40 °C fest ist und ein gewichtsmittleres Molekulargewicht von zumindest 2.000, mittels Gelpermeationschromatographie in Bezug auf Polystyrol-Standard gemessen, aufweist.

**10.** Siliconbeschichtungszusammensetzung nach einem der Ansprüche 1 bis 9, wobei Bestandteil (E) zumindest ein Lösungsmittel ausgewählt aus Wasser, Alkoholen und Ketonen ist und in einer solchen Menge verwendet wird, dass er die Siliconbeschichtungszusammensetzung auf eine Feststoffkonzentration von 10 bis 50 Gew.-% einstellt.

**11.** Siliconbeschichtungszusammensetzung nach einem der Ansprüche 1 bis 10, wobei der Feststoffgehalt der kolloidalen Kieselsäure als Bestandteil (F) 5 bis 100 Gewichtsteile pro 100 Gewichtsteile des gesamten Feststoffgehalts der Bestandteile (A) und (C) beträgt.

**12.** Siliconbeschichtungszusammensetzung nach einem der Ansprüche 1 bis 11, wobei die Menge an polymerisierbarer Vinylverbindung, die als Bestandteil (G) zugesetzt wird, 1 bis 200 Gewichtsteile pro 100 Gewichtsteile des gesamten Feststoffgehalts der Bestandteile (A), (C) und (F) beträgt.

**13.** Verwendung einer Zusammensetzung nach einem der Ansprüche 1 bis 12 zum Beschichten eines organischen Harzsubstrats, vorzugsweise direkt ohne Primer.

**14.** Beschichteter Artikel, umfassend ein organisches Harzsubtrat und einen gehärteten Film einer Siliconbeschichtungszusammensetzung nach einem der Ansprüche 1 bis 12, der direkt auf zumindest eine Oberfläche des Substrats aufgebracht ist.

**15.** Beschichteter Artikel nach Anspruch 14, wobei das organische Harzsubstrat Polycarbonat ist.

**16.** Beschichteter Artikel nach Anspruch 14 oder 15, der einen mittels Farbtonmessgerät gemessenen Vergilbungszahlunterschied ΔYI' von weniger als 10 vor bzw. nach Exposition gegenüber UV-Strahlung in einer Dosis von 300 $MJ/m^2$ und/oder einen mittels Trübungsmessgerät gemessenen Trübungsunterschied ΔHZ von weniger als 10 vor bzw. nach Exposition gegenüber UV-Strahlung in einer Dosis von 300 $MJ/m^2$ aufweist.

## Revendications

**1.** Composition de revêtement de silicone durcissable par une irradiation d'énergie d'activation comprenant

(A) une dispersion aqueuse de particules en solution solide d'oxyde de titane tétragonal de type coeur/gaine, dans laquelle chacune desdites particules de type coeur/gaine est constituée d'un coeur en oxyde de titane

tétragonal ayant de l'étain et du manganèse incorporés en solution solide et une gaine en oxyde de silicium autour du coeur, lesdits coeurs ont un diamètre de distribution cumulative à 50 % sur une base en volume ($D_{50}$) allant jusqu'à 30 nm, et lesdites particules de type coeur/gaine ont un diamètre de distribution cumulative à 50 % sur une base en volume ($D_{50}$) allant jusqu'à 50 nm, les deux mesurés par un procédé de diffusion dynamique de la lumière utilisant une lumière laser, la quantité de l'étain incorporé en solution solide est telle que soit obtenu un rapport molaire du titane à l'étain (Ti/Sn) de 10/1 à 1000/1, et la quantité du manganèse incorporé en solution solide est telle que soit obtenu un rapport molaire du titane au manganèse (Ti/Mn) de 10/1 à 1000/1,
(B) un polymère de vinyle modifié par un uréthane à base de polyester et/ou de polycarbonate,
(C) un condensat hydrolytique pouvant être obtenu à partir d'une condensation (co)hydrolytique d'au moins un alcoxysilane exempt de soufre de formule générale (1) :

$$R^1_mR^2_nSi(OR^3)_{4-m-n} \qquad (1)$$

dans laquelle chacun de $R^1$ et $R^2$ est indépendamment l'hydrogène ou un groupe hydrocarboné en $C_1$ à $C_{12}$ monovalent substitué ou non substitué, $R^1$ et $R^2$ peuvent être liés l'un à l'autre, $R^3$ est un alkyle en $C_1$ à $C_3$, m et n valent indépendamment 0 ou 1, m+n vaut 0, 1 ou 2,
ou un condensat hydrolytique partiel de celui-ci,
(D) un amorceur de photo-polymérisation,
(E) un solvant,
(F) éventuellement de la silice colloïdale, et
(G) un composé vinylique polymérisable autre que les composants (B) et (C),

la teneur en solides du polymère de vinyle modifié par un uréthane (B) étant de 1 à 30 parties en poids pour 100 parties en poids de la teneur totale en solides des composants (A), (C) et (F).

**2.** Composition de revêtement en silicone selon la revendication 1, dans laquelle la teneur en solides du composant (A) est de 5 à 25 % en poids par rapport à la teneur totale en solides de la composition.

**3.** Composition de revêtement en silicone selon la revendication 1 ou 2, dans laquelle le composant (A) contient un dispersant basique choisi parmi l'ammoniac, les sels de métal alcalin, et les composés de formule générale (2) :

$$R^4R^5R^6R^7NOH \qquad (2)$$

dans laquelle chacun de $R^4$, $R^5$, $R^6$ et $R^7$ est indépendamment l'hydrogène ou un groupe aralkyle, aryle ou alkyle en $C_1$ à $C_{10}$.

**4.** Composition de revêtement en silicone selon l'une quelconque des revendications 1 à 3, dans laquelle le composant (B) est un polymère de vinyle modifié par un uréthane à base de polycarbonate.

**5.** Composition de revêtement en silicone selon l'une quelconque des revendications 1 à 4, dans laquelle le composant (B) a une masse moléculaire moyenne en masse de 5 000 à 50 000, telle que mesurée par rapport à des étalons en polystyrène par chromatographie d'exclusion diffusion comme décrit dans la description.

**6.** Composition de revêtement en silicone selon l'une quelconque des revendications 1 à 5, dans laquelle le composant (B) a un indice d'hydroxyle d'au moins 10 % en poids sur la base de la teneur en solides, mesuré par le procédé dans la partie expérimentale de la description.

**7.** Composition de revêtement en silicone selon l'une quelconque des revendications 1 à 6, dans laquelle le condensat hydrolytique servant de composant (C) est obtenu quand le composant (C) est mélangé avec le composant (A), à partir d'une réaction avec l'eau dans le composant (A).

**8.** Composition de revêtement en silicone selon l'une quelconque des revendications 1 à 7, dans lequel la quantité du composant (C) mélangé est de 10 à 90 % en poids par rapport à la teneur totale en solides de la composition.

**9.** Composition de revêtement en silicone selon l'une quelconque des revendications 1 à 8, dans laquelle le composant (C) contient 1 à 50 % en poids de (C-1) une résine de siloxane ayant la formule de composition moyenne (3) :

$$R^8_aSi(OR^9)_b(OH)_cO_{(4-a-b-c)/2} \qquad (3)$$

dans laquelle chaque $R^8$ est indépendamment un groupe organique en $C_1$ à $C_{18}$, chaque $R^9$ est indépendamment un groupe organique en $C_1$ à $C_4$, a, b et c sont des nombres situés dans les plages suivantes : $0,8 \leq a \leq 1,5$, $0 \leq b \leq 0,3$, $0,001 \leq c \leq 0,5$, et $0,801 \leq a+b+c < 2$, la résine de siloxane étant solide à 40°C ou moins et ayant une masse moléculaire moyenne en masse d'au moins 2000, telle que mesurée par rapport à des étalons en polystyrène par chromatographie d'exclusion diffusion.

**10.** Composition de revêtement en silicone selon l'une quelconque des revendications 1 à 9, dans laquelle le composant (E) est au moins un solvant choisi parmi l'eau, les alcools et les cétones, et est utilisé en une quantité telle que la concentration de solides de la composition de revêtement en silicone soit ajustée à 10 à 50 % en poids.

**11.** Composition de revêtement en silicone selon l'une quelconque des revendications 1 à 10, dans laquelle la teneur en solides de la silice colloïdale servant de composant (F) est de 5 à 100 parties en poids pour 100 parties en poids de la teneur totale en solides des composants (A) et (C).

**12.** Composition de revêtement en silicone selon l'une quelconque des revendications 1 à 11, dans laquelle la quantité du composé vinylique polymérisable ajouté en tant que composant (G) est de 1 à 200 parties en poids pour 100 parties en poids de la teneur totale en solides des composants (A), (C) et (F).

**13.** Utilisation d'une composition selon l'une quelconque des revendications 1 à 12 pour le revêtement d'un substrat en résine organique, de préférence directement sans apprêt.

**14.** Article revêtu comprenant un substrat en résine organique et un film durci de la composition de revêtement en silicone de l'une quelconque des revendications 1 à 12 déposée directement sous forme de revêtement sur au moins une surface du substrat.

**15.** Article revêtu selon la revendication 14, dans lequel le substrat en résine organique est un polycarbonate.

**16.** Article revêtu selon la revendication 14 ou 15, présentant une différence d'indice de jaunissement $\Delta$YI', tel que mesuré par un dispositif de mesure de chromaticité, inférieure à 10 avant et après exposition à un rayonnement UV à une dose de 300 $MJ/m^2$, et/ou une différence de voile $\Delta$Hz, tel que mesuré par un dispositif de mesure de voile, inférieure à 10 avant et après exposition à un rayonnement UV à une dose de 300 $MJ/m^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012097257 A
- JP 2010111715 A


### Non-patent literature cited in the description


- *J. Org. Chem.,* 1980, vol. 45, 1164
- *J. Org. Chem.,* 1999, vol. 64, 7707
- *Proceedings of the National Institute of Environmental Studies,* 1992, vol. 11 (4), 9